# EUROPEAN PATENT SPECIFICATION

(11) **EP 3 128 472 B1**
(45) Date of publication and mention of the grant of the patent: **30.09.2020**
(21) Application number: 15003354.6
(22) Date of filing: 24.11.2015
(51) Int. Cl.: G06Q 10/10, G04G 9/00

(54) **MOBILE TERMINAL FOR CONTROLLING A SCHEDULED MONEY TRANSFER**
MOBILES ENDGERÄT ZUR STEUERUNG EINER GEPLANTEN ÜBERWEISUNG
TERMINAL MOBILE POUR LE CONTROL D'UN TRANSFERT D'ARGENT PROGRAMMÉ

(30) Priority: 03.08.2015 KR 20150109806
(43) Date of publication of application: 08.02.2017
(73) Proprietor: LG Electronics Inc., Seoul 07336 (KR)
(72) Inventor: Park, Mihyun, 06772 Seoul (KR); LIM, Gukchan, 06772 Seoul (KR); Shim, Hongjo, 06772 Seoul (KR); LEE, Yoonwoo, 06772 Seoul (KR); KIM, Seonghyok, 06772 Seoul (KR); LEE, Dongeon, 06772 Seoul (KR)
(74) Representative: Beyer, Andreas

(56) References cited:
- EP-A2- 1 965 573
- EP-A2- 2 674 889
- CN-A- 104 484 796
- US-A1- 2013 170 324
- US-A1- 2015 026 647
- US-A1- 2015 049 033

## Description

### BACKGROUND OF THE INVENTION

### 1. Field of the Invention

The present invention relates to a mobile terminal formed to wrap a wrist and a control method thereof.

### 2. Background of the Invention

In general, a terminal may be classified into a mobile (portable) terminal and a stationary terminal according to a moveable state. The mobile terminal may be also classified into a handheld terminal and a vehicle mount terminal according to a user's carriage method. As functions of the terminal become more diversified, the terminal can support more complicated functions such as capturing images or video, reproducing music or video files, playing games, receiving broadcast signals, and the like. By comprehensively and collectively implementing such functions, the mobile terminal may be embodied in the form of a multimedia player or a device.

Various attempts have been made to implement complicated functions in such a multimedia device using hardware or software. Along with such improvements, recent mobile terminals evolve to have various designs. A wrist-watch-type mobile terminal that can be fixed to a user's body is being developed. Considering a characteristic of a wrist-watch-type mobile terminal that is worn by a user, the user can instantly check a notification whenever the notification is generated by a terminal.

Meanwhile, an automatic transfer is being widely, in which a financial institution such as a bank or post office which is authorized by a payer to pay for utility bills, salaries, pensions, or purchase money, automatically withdraws some money from an account of the payer and transfers the money to an account of a payee. When an automatic transfer is set up, a certain amount of money is withdrawn from a predetermined account periodically, e.g., every month, every week, or daily. By using automatic transfer, a payee can increase a return rate of money, and a payer can solve inconvenience of paying money generated periodically. An overdue payment due to unpaid money may be prevented in advance.

However, once an automatic transfer is set up, a certain amount of money is withdrawn at a certain date irrespective of a payer's intention, thus causing various kinds of financial accidents. For example, unfair transfers have occurred in which more money than a payer should actually pay may be withdrawn through an automatic transfer, or an automatic transfer is set up behind a payer's back to make a withdrawal at every predetermined date.

CN 104 484 796 A relates to a portable terminal and a schedule management method. The portable terminal carries out schedule management through a showing dial plate. The portable terminal comprising a schedule information establishing unit, a schedule information editing unit and comprises a schedule reminding unit, wherein the schedule information establishing unit is used for establishing the schedule information of a user based on signal input; the schedule information editing unit aims at the newly-established schedule information and enrolls the newly-established schedule information into a monitoring list, and generates corresponding schedule guide information aiming at every schedule; the schedule reminding unit is used for reminding the user to complete the schedules in the monitoring list according to a preset reminding model.

US 2015/049033 A1 discloses a mobile terminal including a main body configured to be worn on a wrist; a display unit configured to display a lock screen indicating a locking mode of the mobile terminal, said lock screen including a clock having a minute hand and an hour hand connected at a central control point and having time identifications indicating a time of day surrounding the central control point; and a controller configured to receive a touch input on the central control point and at least first and second time identifications to set a range of time, unlock the mobile terminal based on the received touch input, and display information corresponding to the set range of time.

US 2013/170324 A1 discloses an operating method of a clock-calendar and a portable electronic device using the method, where a touch screen display of the portable electronic device displays the clock-calendar with a clock pattern. In the method, a gesture on the touch screen display corresponding to the clock-calendar is detected and analyzed, where the gesture includes a gesture starting point and a gesture finishing point on the touch screen display. After the gesture is analyzed, the clock-calendar is operated according to the gesture.

US 2015/026647 A1 refers to a mobile terminal and a control method thereof. The mobile terminal includes a main body that is configured to be wearable on a specific portion of a user's body, a sensing unit that is configured to sense whether or not the main body has been worn, and also sense a user gesture for deciding the worn position of the main body, and a controller that is configured to decide the worn position of the main body according to the sensed user gesture, and setting a user input for generating a first control command in a different manner based on the decided worn position. With the configuration, the main body may sense the worn position by itself so as to provide a user interface, which is more intuitive and convenient for the user, according to the sensed worn position.

EP 2 674 889 A2 discloses a mobile device including a display unit, a sensor configured to sense user's touch done on a surface of the display unit in a disabled state of the display unit, a storage unit configured to store preset gesture information, a controller configured to enable the display unit when a user's touch operation matched with the gesture information is sensed, execute a wallet application, and display an execution screen, and a communication unit configured to transmit information for a selected payment option to an external apparatus when the payment option is selected on the execution screen and perform a payment.

### SUMMARY OF THE INVENTION

Accordingly, one object of the present invention is to address these or other problems with the related art.

Therefore, an aspect of the detailed description is to provide a mobile terminal that outputs a notification associated with the automatic transfer and performs control associated with the automatic transfer while performing a function of a clock that shows the current time, and a control method thereof.

Another aspect of the detailed description is to provide a mobile terminal that provides a novel interface for a financial transaction associated with the automatic transfer such that the financial transaction associated with the automatic transfer is performed not by a financial institution by which an account is opened, but by a payer who is an owner of the account, and a control method thereof.

To achieve these and other advantages and in accordance with the purpose of this specification, as embodied and broadly described herein, the present invention provides a mobile terminal according to claim 1.

Preferred embodiments of the present invention are defined in the dependent claims. The mobile terminal includes a main body, a sensor configured to continuously sense a wearer's biometric signal, a band connected to the main body and configured to be wearable on a wrist; a wireless communication unit disposed on the main body and configured to communicate with a predetermined server, a touch screen disposed on a front surface of the main body and configured to sense a touch and output screen information including at least two indication hands moving to show a current time, and a controller configured to, when an automatic transfer from a predetermined account is scheduled to be made within a reference time from the current time, control the touch screen to output a notification icon indicating the automatic transfer in the screen information, and when a touch input is applied to the notification icon, perform control associated with the automatic transfer based on the applied touch input.

According to an embodiment, in response to a predetermined touch input being applied to the notification icon, the controller is further configured to transmit an automatic transfer suspension message to the server such that the automatic transfer is suspended.

According to an embodiment, the controller is further configured to: display the notification icon at an edge of the touch screen, and change an output position of the notification icon depending on a time at which the automatic transfer is scheduled to be made.

According to an embodiment, the screen information further includes a plurality of indices indicating a time, and the controller is further configured to display the notification icon to any one index corresponding to a time at which the automatic transfer is scheduled to be made among the plurality of indices.

According to an embodiment, in response to a drag input of moving from a first position of the edge to a second position being applied to the notification icon, the controller is further configured to transmit a time change message to the server such that the time at which the automatic transfer is scheduled to be made is changed to a time corresponding to the second position.

According to an embodiment, the controller is further configured to process the notification icon differently depending on a result of comparing an amount of savings in the predetermined account with an amount of money to be withdrawn through the automatic transfer.

According to an embodiment, in response to the amount of savings in the predetermined account being smaller than the amount of money to be withdrawn through the automatic transfer, the controller is further configured to highlight the notification icon, and in response to the amount of savings in the predetermined account being greater than or equal to the amount of money to be withdrawn through the automatic transfer, the controller is further configured not to highlight the notification icon.

According to an embodiment, in response to nonpayment occurring since the amount of savings in the predetermined account is smaller than the amount of money to be withdrawn through the automatic transfer, the controller is further configured to display the highlighted notification icon until the nonpayment is clear.

According to an embodiment, in response to the automatic transfer being completed, the controller is further configured to stop displaying the notification icon.

According to the present invention, in response to the amount of savings in the predetermined account being smaller than the amount of money to be withdrawn through the automatic transfer, the controller is further configured to display a graphic object on the touch screen corresponding to an electronic wallet (secure element (SE)), in addition to the notification icon.

In the present invention, in response to a gesture of dragging and dropping the graphic object to the notification icon while the notification icon and the graphic object are displayed, the controller is further configured to transmit a transfer message to the server such that at least some of savings of the electronic wallet are transferred to the predetermined account.

In detail, the controller of the present invention is further configured to calculate an insufficient amount of money for the automatic transfer and transmit the transfer message to the server such that the calculated insufficient amount of money is transferred from the electronic wallet to the predetermined account.

According to an embodiment, the controller may be further configured to display a virtual keypad on the touch screen for receiving a password before performing control associated with the automatic transfer, and perform control associated with the automatic transfer when a password received through the virtual keypad matches a predetermined password, and limit the control associated with the automatic transfer when the password received through the virtual keypad does not match the predetermined password.

According to an embodiment, the reference time is a time set by a user to notify of the automatic transfer.

According to an embodiment, the controller is further configured to change a shape of the notification icon depending on a payee who receives an amount of savings deposited in the predetermined account through the automatic transfer.

According to an embodiment, in response to an automatic transfer from a predetermined account being scheduled to be made within the predetermined time from the current time, the controller is further configured to display an image having a length gradually changing over time at an edge of the touch screen.

According to an embodiment, in response to a plurality of automatic transfers from the predetermined account being scheduled to be made within the predetermined time from the current time, the controller may be further configured to display the notification icon in the screen information and display information regarding a number of scheduled automatic transfers in the notification icon.

According to an embodiment, the mobile terminal may comprise a sensor configured to sense whether the main body is worn on the wrist, wherein the controller is further configured to not display the display of the notification icon when the main body is not worn on the wrist.

According to an embodiment, in response to a touch input consecutively applied to the touch screen at a time interval being sensed, the controller may be further configured not to display the notification icon.

Furthermore, a mobile terminal according to an embodiment of the present disclosure may comprise a main body; a wireless communication unit disposed on the main body and configured to receive information regarding an automatic transfer; a touch screen disposed on a front surface of the main body and configured to display screen information; and a controller configured to: display a notification icon on the touch screen notifying that the information has been received, and in response to a touch input being applied to the touch screen, execute a control function associated with the automatic transfer based on the applied touch input.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1A is a block diagram illustrating a mobile terminal associated with the present invention;
FIGS. 1B and 1C are conceptual diagrams showing an example of a mobile terminal associated with the present invention, which is seen in different directions;
FIG. 2 is a conceptual diagram illustrating a modification of a mobile terminal according to an embodiment of the present invention;
FIG. 3 is a perspective view illustrating a wearable device as a watch-type mobile terminal associated with another embodiment of the present invention;
FIG. 4 is a view showing an automatic transfer system using a mobile terminal according to an embodiment of the present invention;
FIG. 5 is a flowchart representatively showing a control method of a mobile terminal according to an embodiment of the present invention;
FIGS. 6A to 6D are conceptual diagrams illustrating a mobile terminal that outputs a notification icon;
FIGS. 7A to 7E are conceptual diagrams illustrating a mobile terminal that performs different control functions associated with an automatic transfer based on a touch input applied to a notification icon;
FIGS. 8A and 8B are conceptual diagrams illustrating a mobile terminal that outputs a notification associated with an automatic transfer;
FIG. 9 is conceptual view illustrating a mobile terminal that receives a password before performing a control function associated with an automatic transfer;
FIGS. 10A to 12B are conceptual diagrams illustrating an operation of a mobile terminal when a plurality of automatic transfers are scheduled to be made; and
FIGS. 13 to 15 are conceptual diagrams illustrating a mobile terminal that provides a new interface associated with an automatic transfer.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Although the terms first, second, etc. may be used herein to describe various elements, these elements should not be limited by these terms. These terms are generally only used to distinguish one element from another. When an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

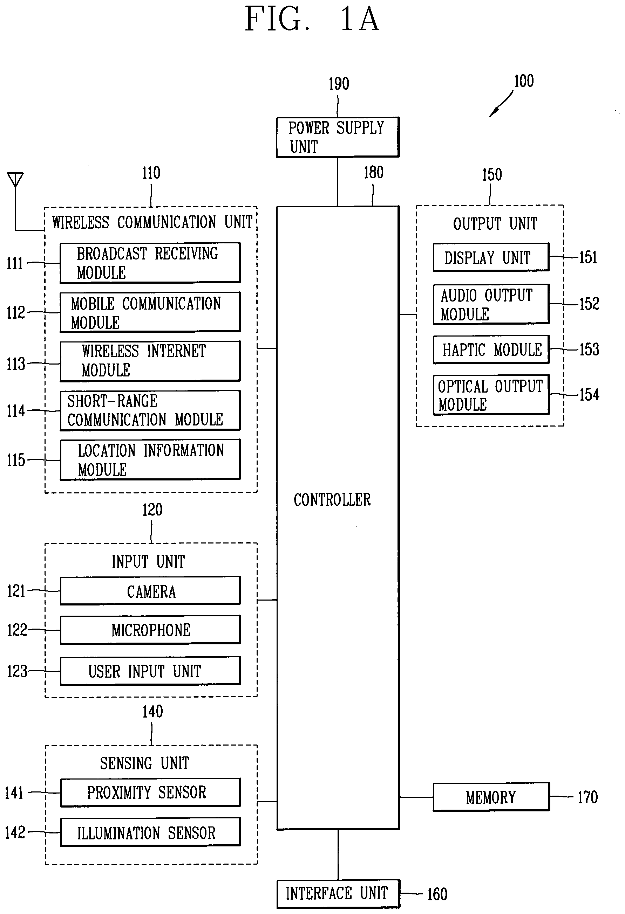

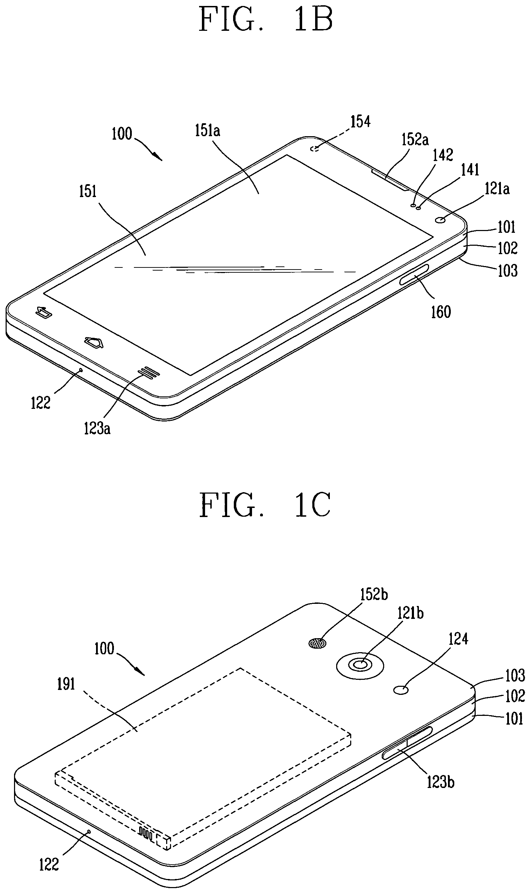

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions. The mobile terminal 100 is shown having components such as a wireless communication unit 110, an input unit 120, a sensing unit 140, an output unit 150, an interface unit 160, a memory 170, a controller 180, and a power supply unit 190. Implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 can be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 can perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the body, or configured to be detachable from the body.

At least some of the above components may operate in a cooperating manner, so as to implement an operation or a control method of a glass type terminal according to various embodiments to be explained later. The operation or the control method of the glass type terminal may be implemented on the glass type terminal by driving at least one application program stored in the memory 170.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which can exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. Further, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this instance, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others. As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller can process the received signals, and then transmit corresponding data to the controller 180. Accordingly, the controller 180 can sense which region of the display unit 151 has been touched. Here, the touch controller can be a component separate from the controller 180, the controller 180, and combinations thereof.

In some embodiments, the controller 180 can execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor. Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 can include message reception, call signal reception, a missed call, an alarm, a schedule notice, an email reception, information reception through an application, and the like.

A signal output by the optical output module 154 may be implemented so the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 can also be operated in relation to a network storage device that performs the storage function of the memory 170 over a network, such as the Internet.

The controller 180 can typically control the general operations of the mobile terminal 100. For example, the controller 180 can set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the body for charging. The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance. Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type body. However, the mobile terminal 100 can alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the body to output information. As illustrated, a window 151a of the display unit 151 may be mounted to the front case 101 to form the front surface of the body together with the front case 101. In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like. As an alternative to the example in which the plurality of cases form an inner space for accommodating components, the mobile terminal 100 can be configured such that one case forms the inner space. In this example, a mobile terminal 100 having a uni-body is formed so synthetic resin or metal extends from a side surface to a rear surface.

If desired, the mobile terminal 100 can include a waterproofing unit for preventing introduction of water into the body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, alternative arrangements are possible and within the teachings of the instant disclosure. Some components may be omitted or rearranged. For example, the first manipulation unit 123a may be located on another surface of the body, and the second audio output module 152b may be located on the side surface of the body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a. The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this instance, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170. The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof. Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit may be located on the rear surface of the body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the body. As one example, the rear input unit may be located on an upper end portion of the rear side of the body such that a user can easily manipulate it using a forefinger when the user grabs the body with one hand. Alternatively, the rear input unit can be positioned at most any location of the rear side of the body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 can include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123. The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject. As shown in FIG. 1C, the second audio output module 152b can be located on the body. The second audio output module 152b may implement stereophonic sound functions in conjunction with the first audio output module 152a, and may be also used for implementing a speaker phone mode for call communication.

At least one antenna for wireless communication may be located on the body. The antenna may be installed in the body or formed by the case. For example, an antenna which configures a part of the broadcast receiving module 111 may be retractable into the body. Alternatively, an antenna may be formed using a film attached to an inner surface of the rear cover 103, or a case that includes a conductive material.

A power supply unit 190 for supplying power to the mobile terminal 100 can include a battery 191, which is mounted in the body or detachably coupled to an outside of the body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 can be provided. The cover or pouch may cooperate with the display unit 151 to extend the function of the mobile terminal 100. Another example of the accessory is a touch pen for assisting or extending a touch input to a touch screen.

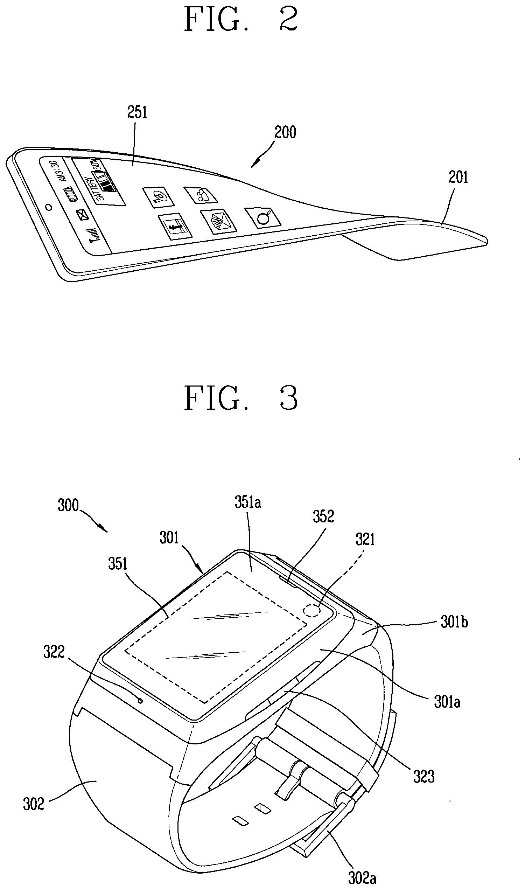

FIG. 2 is a conceptual view of a deformable mobile terminal 200 according to an alternative embodiment of the present invention. In this figure, the mobile terminal 200 is shown having a display unit 251, which is a type of display that is deformable by an external force. This deformation, which includes display unit 251 and other components of mobile terminal 200, may include any of curving, bending, folding, twisting, rolling, and combinations thereof. The deformable display unit 251 may also be referred to as a "flexible display unit." In some implementations, the flexible display unit 251 may include a general flexible display, electronic paper (also known as e-paper), and combinations thereof. In general, mobile terminal 200 may be configured to include features that are the same or similar to that of mobile terminal 100 of FIGS. 1A-1C .

The flexible display of mobile terminal 200 is generally formed as a lightweight, non-fragile display, which still exhibits characteristics of a conventional flat panel display, but is instead fabricated on a flexible substrate which can be deformed as noted previously. The term e-paper may be used to refer to a display technology employing the characteristic of a general ink, and is different from the conventional flat panel display in view of using reflected light. E-paper is generally understood as changing displayed information using a twist ball or via electrophoresis using a capsule.

When the flexible display unit 251 is not deformed (for example, in a state with an infinite radius of curvature and referred to as a first state), a display region of the flexible display unit 251 includes a generally flat surface. When the flexible display unit 251 is deformed from the first state by an external force (for example, a state with a finite radius of curvature and referred to as a second state), the display region may become a curved surface or a bent surface. As illustrated, information displayed in the second state may be visual information output on the curved surface. The visual information may be realized so a light emission of each unit pixel (sub-pixel) arranged in a matrix configuration is controlled independently. The unit pixel denotes an elementary unit for representing one color.

According to one alternative embodiment, the first state of the flexible display unit 251 may be a curved state (for example, a state of being curved from up to down or from right to left), instead of being in flat state. In this embodiment, when an external force is applied to the flexible display unit 251, the flexible display unit 251 may transition to the second state such that the flexible display unit is deformed into the flat state(or a less curved state) or into a more curved state.

If desired, the flexible display unit 251 may implement a flexible touch screen using a touch sensor in combination with the display. When a touch is received at the flexible touch screen, the controller 180 can execute certain control corresponding to the touch input. In general, the flexible touch screen is configured to sense touch and other input while in both the first and second states. One option is to configure the mobile terminal 200 to include a deformation sensor which senses the deforming of the flexible display unit 251. The deformation sensor may be included in the sensing unit 140.

The deformation sensor may be located in the flexible display unit 251 or the case 201 to sense information related to the deforming of the flexible display unit 251. Examples of such information related to the deforming of the flexible display unit 251 may be a deformed direction, a deformed degree, a deformed position, a deformed amount of time, an acceleration that the deformed flexible display unit 251 is restored, and the like. Other possibilities include most any type of information which can be sensed in response to the curving of the flexible display unit or sensed while the flexible display unit 251 is transitioning into, or existing in, the first and second states.

In some embodiments, controller 180 or other component can change information displayed on the flexible display unit 251, or generate a control signal for controlling a function of the mobile terminal 200, based on the information related to the deforming of the flexible display unit 251. Such information is typically sensed by the deformation sensor.

The mobile terminal 200 is shown having a case 201 for accommodating the flexible display unit 251. The case 201 can be deformable together with the flexible display unit 251, taking into account the characteristics of the flexible display unit 251. A battery located in the mobile terminal 200 may also be deformable in cooperation with the flexible display unit 261, taking into account the characteristic of the flexible display unit 251. One technique to implement such a battery is to use a stack and folding method of stacking battery cells.

In accordance with still further embodiments, a mobile terminal may be configured as a device which is wearable on a human body. Such devices go beyond the usual technique of a user grasping the mobile terminal using their hand. Examples of the wearable device include a smart watch, a smart glass, a head mounted display (HMD), and the like.

A typical wearable device can exchange data with (or cooperate with) another mobile terminal 100. In such a device, the wearable device generally has functionality that is less than the cooperating mobile terminal. For instance, the short-range communication module 114 of a mobile terminal 100 can sense or recognize a wearable device that is near-enough to communicate with the mobile terminal. In addition, when the sensed wearable device is a device which is authenticated to communicate with the mobile terminal 100, the controller 180 can transmit data processed in the mobile terminal 100 to the wearable device via the short-range communication module 114, for example. Hence, a user of the wearable device can use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

FIG. 3 is a perspective view illustrating one example of a watch-type mobile terminal 300 in accordance with another exemplary embodiment. As illustrated in FIG. 3, the watch-type mobile terminal 300 includes a main body 301 with a display unit 351 and a band 302 connected to the main body 301 to be wearable on a wrist. In general, mobile terminal 300 can be configured to include features that are the same or similar to that of mobile terminal 100 of FIGS. 1A-1C .

The main body 301 may include a case having a certain appearance. As illustrated, the case may include a first case 301a and a second case 301b cooperatively defining an inner space for accommodating various electronic components. Other configurations are possible. For instance, a single case may alternatively be implemented, with such a case being configured to define the inner space, thereby implementing a mobile terminal 300 with a uni-body.

The watch-type mobile terminal 300 can perform wireless communication, and an antenna for the wireless communication can be installed in the main body 301. The antenna may extend its function using the case. For example, a case including a conductive material may be electrically connected to the antenna to extend a ground area or a radiation area.

The display unit 351 is shown located at the front side of the main body 301 so that displayed information is viewable to a user. In some embodiments, the display unit 351 includes a touch sensor so that the display unit can function as a touch screen. As illustrated, window 351a is positioned on the first case 301a to form a front surface of the body together with the first case 301a.

The illustrated embodiment includes audio output module 352, a camera 321, a microphone 322, and a user input unit 323 positioned on the main body 301. When the display unit 351 is implemented as a touch screen, additional function keys may be minimized or eliminated. For example, when the touch screen is implemented, the user input unit 323 may be omitted.

The band 302 is commonly worn on the user's wrist and may be made of a flexible material for facilitating wearing of the device. As one example, the band 302 may be made of fur, rubber, silicon, synthetic resin, or the like. The band 302 may also be configured to be detachable from the main body 301. Accordingly, the band 302 may be replaceable with various types of bands according to a user's preference.

In one configuration, the band 302 may be used for extending the performance of the antenna. For example, the band may include therein a ground extending portion electrically connected to the antenna to extend a ground area. The band 302 may include fastener 302a. The fastener 302a may be implemented into a buckle type, a snap-fit hook structure, a Velcro® type, or the like, and include a flexible section or material. The drawing illustrates an example that the fastener 302a is implemented using a buckle.

The touch screen 151 will be described again. In an embodiment of the present invention, the touch screen 151 is disposed at a front side of a body and configured to sense a touch and output screen information. In more detail, the touch screen 151 includes a touch panel that senses a touch and a display that outputs the screen information. The display may be turned on/off and output the screen information in an "on" state. The touch panel may maintain its activation state even when the display is turned off, and thus may sense a touch applied to the touch screen 151.

The touch panel may maintain the activation state irrespective of on/off of the display. However, in order to sense a touch, the display may be activated at different intervals depending on whether the display is in an "on" or "off" state. For example, a first interval is activated to accurately sense a touch when the display is in an "on" state. However, when the displayed is in an "off" state, the display may be activated at intervals greater than the first interval in order to efficiently consume a battery.

The screen information denotes various kinds of visual information that may be output to the touch screen 151. However, considering characteristics of the mobile terminal worn on a wrist, it is assumed that the screen information includes a plurality of indices indicating a time and at least two indication hands moving in order to show the current time. That is, the screen information output to the touch screen 151 may be changed variously depending on the embodiment.

The indices included in the screen information are composed of numerals or symbols, and the indication hands include at least one of a hour hand, a minute hand, and a second hand. The hour hand moves over time to indicate an index corresponding to the hour of the current time. The minute hand moves to indicate an index corresponding to the minute of the current time, and the second hand moves to indicate an index corresponding to the second of the current time.

The controller 180 controls the touch screen such that the indication hands may move over time to show the current time. Thus, the user can identify the current time using at least one of the indices indicated by the hour hand, the minute hand, and the second hand. The screen information may further include a control point at which end portions of the hour hand and the minute hand are connected. The hour hand and the minute hand rotate in a clockwise direction with respect to the control point. The control point may operate as an input region for receiving a user input associated with terminal control.

At least one of the plurality of indices, the hour hand, the minute hand, and the second hand may be changed in various forms based on setting of the user. For example, the plurality of indices may be composed of numerals such as Arab numerals or Roman numerals or may be composed of figures such as a bar or a dot. The numerals and the figures may be used together. The mobile terminal may show the current time to the user by outputting at least one of the plurality of indices, the hour hand, the minute hand, and the second hand.

Advantageously, when the mobile terminal is worn on a wrist, the mobile terminal may instantly deliver information, such as next schedule, to be known by the user. In more detail, when a predetermined event occurs while the screen information is output, the controller can output a graphic object or a notification icon associated with the event in addition to the screen information. In this instance, in addition to outputting a notification in a visual manner, the controller 180 can also output the notification in at least one of visual, auditory, and tactile manners.

For example, the occurrence of the event may include when there is a missed call, when there is an application to be updated, when a message arrives, when there is a notification generated by an application, when charging is performed, when a payment terminal capable of mobile payment is located within a predetermined distance, when an alarm is set up, and a case in which there is a missed notification.

As another example of the occurrence of the event, specific information is received through a wireless communication unit of the terminal. This denotes an event having occurred in the application associated with the specific information. The controller senses this event. Alternatively, when there is an item input by the user in the schedule, and a date corresponding to the item is reached, this denotes the occurrence of an event in a schedule management application. For example, it can be considered that the event has occurred when an automatic transfer notification message is received from a predetermined server, or a date input through automatic transfer in the schedule is reached.

The application has a concept including a widget or a home launcher and denotes all types of program that can run on the terminal. Accordingly, the application may be a program that performs a function of web browsing, video playing-back, message transmission/reception, schedule management, or application update.

As another example, the occurrence of the event may denote when an automatic transfer from a predetermined account is scheduled to be made within a predetermined time from the current time. For example, when a withdrawal from a predetermined account through automatic transfer is scheduled to be made within 12 hours from the current time, the controller can determine that a predetermined event has occurred.

As still another example, the occurrence of the event may denote the application of a predetermined user input to the touch screen 151. For example, when a touch input of tapping a predetermined region of the touch screen 151 two times or more within a predetermine time is applied, or when a touch input of touching any one of the plurality of indices and then continuously move the touch to the control point that connects the end portions of the hour hand and minute hand is applied, the controller can determine that a predetermined event has occurred.

The controller 180 can output a notification icon corresponding to an event having occurred in the screen information in response to the occurrence of the predetermined event. As another example, the controller 180 can change at least one of the plurality of indices being output to the touch screen 151 into the notification icon corresponding to the event having occurred. When the plurality of indices include twelve numerals, an index corresponding to any one of the twelve numerals may be changed as the notification icon.

When one notification icon is output, the controller 180, the controller 180 can limit the output of any one of the plurality of indices and may output the notification icon instead of the index. Alternatively, the controller 180 can control the touch screen 151 such that the notification icon is output overlapping the index and thus at least a portion of the index is hidden by the notification icon.

The touch screen 151 may output a notification icon of an application selected according to a predetermined criterion, instead of the numeral corresponding to the index. For example, when a first event occurs in a first application, and a second event occurs in a second application, numeral 1 and numeral 2, which are indices, may be converted to notification icons corresponding to the first and second events, respectively. In this instance, a first notification icon corresponding to the first event may be output to a region in which numeral 1 has been output, instead of numeral 1, and a second notification icon corresponding to the second event may be output to a region in which numeral 2 had been output, instead of numeral 2.

When the event is automatic transfer, the controller can output a notification icon corresponding to the automatic transfer, instead of an index corresponding to a time at which the automatic transfer is scheduled to be made. For example, when a first automatic transfer is scheduled to be made at 5 o'clock, and a second automatic transfer is scheduled to be made at 7 o'clock, a third notification icon corresponding to the first automatic transfer may be output instead of numeral 5, which is one of the indices, and a fourth notification icon corresponding to the second automatic transfer may be output instead of numeral 7, which is another one of the indices.

The notification icon may be a quadrangular or circular image or icon, and may have a different image according to the type of the event (e.g., the type of an automatic transfer when the event is the automatic transfer). Here, the different image denotes an image having, for example, a different shape, length, or color.

According to an embodiment of the present invention, because of the occurrence of the predetermined event, a notification icon may be displayed in a position in which an index has been displayed, but the user can identify the current time. For example, when the first notification icon is display in a position where numeral 1 has been displayed, and the hour hand indicates the first notification icon, the user can identify the hour corresponding to the current time as one o'clock. Accordingly, although the notification icon is displayed instead of the index, a time informing function, which is an original function of a watch, may be effectively provided. Thus, the user can check the current time and information regarding an event having occurred in the terminal at the same time by just watching the touch screen of the mobile terminal.

The automatic transfer corresponding to an example of the event denotes a financial transaction or financial service in which a financial institution, such as a bank, automatically withdraws savings from an account of a payer at a certain date and transfers the savings to an account of a payee. When an automatic transfer is set up, any money is withdrawn from a predetermined account periodically, e.g., every month, every week, or daily. In this instance, the money is set up by a payee.

However, once an automatic transfer is set up, a certain amount of money is withdrawn at a certain date irrespective of a payer's intention, thus causing various kinds of financial accidents. For example, unfair transfers have occurred in which more money than a payer should actually pay may be withdrawn through an automatic transfer, or an automatic transfer is set up behind a payer's back to make a withdrawal at every predetermined date. As another example, an overdue payment may occur when money deposited in the payer's account is smaller than money to be withdrawn. Since notification of the automatic transfer and the automatically-transferred money is not legally compulsory, the possibility that a financial accident will occur further increases.

Thus, the present invention is directed to providing a mobile terminal that outputs a notification associated with the automatic transfer and performs control associated with the automatic transfer while performing a function of a clock that shows the current time, and a control method thereof. Operations implemented by the mobile terminal described in FIGS. 1 to 3 will be described below in detail with reference to the drawings.

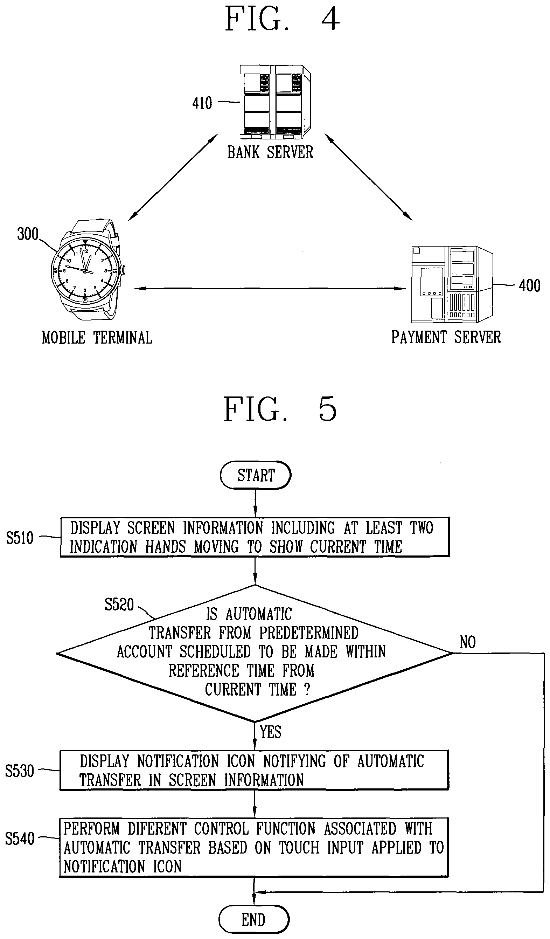

FIG. 4 is a view showing an automatic transfer system using a mobile terminal according to an embodiment of the present invention. Referring to FIG. 4, the automatic transfer system includes a payment server 400, a bank server 410, and a mobile terminal 300. In addition, the automatic transfer system may further include a relay server that relays the payment server 300, the bank server 410, and the mobile terminal 300. Communication may be performed by the relay server.

The payment server 400 sets an amount of money to be deposited to a payee account through an automatic transfer. For example, the payment server 400 may be managed by a card company, a bank, an insurance company, a public institution, or a company that regularly provides goods and services to users. The payment server 400 may calculate an amount of money to be paid by a user of the mobile terminal 300 and send the calculated amount of money to the mobile terminal 300 and the bank server 410. That is, the payment server 400 notifies the mobile terminal 300 and the bank server 410 of the amount of money to be paid through an automatic transfer.

The bank server 410 manages savings of an account belonging to the user of the mobile terminal 300. In more detail, the bank server 410 records at least one account belonging to the user and an amount of money deposited to or withdrawn from the account. When an automatic transfer is set up in the account, the bank server 410 automatically withdraws savings from the account and deposits the savings in a payee account. A condition set for the automatic transfer denotes a date and time at which the automatic transfer is performed. For example, when the condition is set as "17:00 on the first day of every month," the bank server 410 may withdraw an amount of money notified by the payment server 400 and deposit the amount in the payee amount at 17:00 on the first day of every month. In addition, when the automatic transfer is performed, the bank server 410 may notify the mobile terminal 300 of the amount of money withdrawn through the automatic transfer.

When the automatic transfer is scheduled to be made, the mobile terminal 300 can output a notification before the automatic transfer is performed. The mobile terminal 300 can also further output detail information regarding an account set for the automatic transfer, an amount of money to be withdrawn through the automatic transfer, a date and time on which the automatic transfer is scheduled to be made, a payee, the presence of a balance, etc.

In addition, the mobile terminal 300 can perform various kinds of control associated with the automatic transfer. In more detail, the mobile terminal 300 can generate an associated message and transmit the message to the bank server 410 such that a financial transaction associated with the automatic transfer is performed. The bank server 410 processes a financial transaction associated with the automatic transfer based on the message received from the mobile terminal 100. The financial transaction associated with the automatic transaction may include, for example, suspension of the automatic transfer, prior transfer in which the automatic transfer is performed before an originally scheduled time, and cancellation of the automatic transfer. The user can use the mobile terminal 100 as a device for performing a financial transaction associated with the automatic transfer.

The mobile terminal 300 can be equipped with an electronic wallet (e.g., a secure element (SE)) for performing a financial transaction associated with the automatic transfer and may output information associated with an account corresponding to the secure element (SE) to the touch screen 151. Next, the mobile terminal 300 can use an amount of money deposited or charged in the account of the electronic wallet (SE) to perform payment or perform account transfer or automatic transfer.

Here, the electronic wallet (SE) may denote a payment method (e.g., an IC card, a universal subscribed identity module (USIM), a micro SD, a sticker, and an embedded SE, etc.) for performing a payment function through communication with the payment server 400 or the bank server 410. In addition, the information associated with the account of the electronic wallet (SE) may include user information, a charged balance, and use details of an account registered in at least one of a virtual account, a real account, a prepaid card, and a mobile phone payment account that are issued by a financial institution, in addition to a previously charged amount of money and points.

Here, the electronic wallet (SE) denotes a kind of security region in which important data such as financial information, authentication information, and a service application may be stored safely, and example, which are mainly widely used, of the secure element (SE) include a universal subscribed identity module (USIM), a micro SD, a sticker, and an embedded SE, etc.

In addition, the account of the electronic wallet (SE) may be mapped to at least one of a virtual account, a real account, a prepaid card, a deferred card, and a mobile phone payment account and then previously registered. Accordingly, the information associated with the account of the electronic wallet (SE) conceptually includes all information regarding user information, a charged balance, and use details of a registered account.

The mobile terminal 300 can use a balance charged in the account of the electronic wallet (SE) to perform electronic finance. In this instance, the user can user the mobile terminal 300 to instead perform a function that may be performed through cash, a credit card, a point card, or a transportation card, without separately possessing the cash, credit card, point card, or transportation card. The function may include a function associated with the finance, and the finance-associated function may denote, for example, a mobile banking function such as a bank transaction or credit card transaction, a transportation card function ("K-merc"), a point accumulation or use function, a deposit and withdrawal function, and a transfer function. Furthermore, the finance-associated function may denote a payment function that is performed in a short-distance wireless communication with a card terminal through a wireless communication unit of the mobile terminal 300.

In order to safely use the electronic wallet, the mobile terminal 300 can further include a security module (e.g., a connection manager). A security module (e.g., a security agent) is configured to safely transmit and receive data between the mobile terminal 300 and the bank server 410. In particular, since security is important for finance associated information such as user information or an amount of money charged in the account of the electronic wallet (SE), the mobile terminal 300 can encode and decode data through the security agent.

Next, FIG. 5 is a flowchart representatively showing a control method of a mobile terminal according to an embodiment of the present invention. First, the controller 180 displays screen information including at least two indication hands that move to show the current time (S510). The at least two indication hands may include an hour hand indicating an hour and a minute hand indicating a minute. In addition, the screen information may include a plurality of indices composed of numerals or symbols that represent a time. However, the present invention is not limited thereto, and may be applied to a variety screen information such as a lock screen, a home screen, etc.

Next, the controller 180 determines whether an automatic transfer from a predetermined account is scheduled to be made within a reference time from the current time (S520) and displays a notification icon, which informs about the automatic transfer according to a result of the determination, in the screen information (S530).

In more detail, the controller 180 determines whether the automatic transfer is scheduled to be made in future within the reference time from a predetermined time regularly or irregularly. For the determination, the controller 180 can store, in the memory 170 or electronic wallet (SE), a predetermined account, an automatic transfer set for the predetermined account, a time set for the predetermined account, and information associated with a reference time. Here, the reference time is a time set by a user to inform about the automatic transfer and may be reset variously by a user input. For example, the reference time may be changed variously by the user input (e.g., 24 hours, 12 hours, and 1 hour).

When the automatic transfer is scheduled to be made, the controller 180 displays a notification icon for informing about the automatic transfer in the screen information being output. The notification icon may be a quadrangular or circular image, and may have a different image according to a payee who receives an amount of money disposed in the predetermined account through the automatic transfer. For example, when the payee is a card company, the notification icon is a card image. When the payee is a building owner, the notification icon is a building image. When the payee is a person stored as contacts, the notification icon may be an image included in the contacts.

The notification icon may be output at an edge of the touch screen, and a n output position of the notification icon may be varied depending on a time at which the automatic transfer is scheduled to be made. For this, the edge of the touch screen may serve as a time line. The time line includes a starting point and an ending point, and a starting time and an ending time are set for each of the starting point and the ending point. Different times are set for points of the time line. When the touch screen 151 is circular, a time corresponding to one point of the time line may increase by a unit time in a clockwise direction. For example, when the starting time is set to be 0 o'clock, and the ending time is set to 12 o'clock, one point positioned in a 12 o'clock direction may correspond to 0 o'clock, and one point positioned in a 6 o'clock direction may correspond to 6 o'clock. As another example, when the starting time is set to be 0 o'clock, and the ending time is set to 24 o'clock, one point positioned in a 12 o'clock direction may correspond to 0 o'clock, and one point positioned in a 6 o'clock direction may correspond to 12 o'clock.

In other words, when a time at which the automatic transfer is scheduled to be made is 6 o'clock, the notification icon is displayed at one point positioned in a 6 o'clock direction out of an edge of the touch screen 151. As another example, the notification icon may be output instead of numeral 6 indicating 6 o'clock or may be output overlapping numeral 6. That is, among the plurality of indices included in the screen information, the notification icon may be output to any one index corresponding to a time at which the automatic transfer is scheduled to be made.

In consideration of a characteristic in which the mobile terminal is worn on a wrist, the size of the touch screen 151 may necessarily be small. A small touch screen has a limitation in that a large amount of visual information cannot be output. However, the mobile terminal according to an embodiment of the present invention may use the edge of the touch screen 151 as the time line, thus overcoming the limitation. For example, when a card image is newly output at a 6 o'clock position while the time hand and the minute hand indicate that it's 1:30, the user can intuitively sense a fact that the automatic transfer is scheduled to be made by a card company after 4 hours 30 minutes, that is at, 6 o'clock.

Next, the controller 180 performs a different control function associated with the automatic transfer based on a touch input applied to the notification icon (S540). The controller 180 senses the touch input applied to the notification icon and performs a control function corresponding to the touch input in response to the touch input.

Here, the control function associated with the automatic transfer may denote all kinds of functions associated with the automatic transfer. For example, the control function may include outputting detailed information associated with the automatic transfer to the touch screen 151, suspending withdrawal through the automatic transfer, changing a time at which the automatic transfer is scheduled to be made, and cancelling the automatic transfer. As another example, the control function may include a function of prepaying for the automatic transfer and a function of, when there is a lack of savings in a predetermined account, transferring the short amount of savings from another account to the predetermined account.

That is, different control associated with the automatic transfer may be executed depending on the type of the touch input. For example, detailed information associated with the automatic transfer may be output when a short touch is applied to the notification icon, and the automatic transfer may be suspended when a long touch is applied. When a drag input is applied to the notification icon, a time at which the automatic transfer is scheduled to be made may be changed. The type of the touch input and the control function thereof will not be limited to the above-mentioned embodiments.

The controller 180 performs a control function associated with the automatic transfer based on the touch input and transmits an associated message to a predetermined server such that a financial transaction is made according to the control function. The predetermined server may be, for example, at least one of the bank server 410 and the payment server 420 that are described with reference to FIG. 4.

Accordingly, a financial transaction associated with the automatic transfer may be performed not by a financial institution by which an account is opened, but by a payer who is an owner of the account. In addition, a new interface for performing a financial transaction associated with the automatic transfer is provided by the mobile terminal, thereby enhancing user convenience.

The above-described control method associated with the present invention may be embodied in several forms as shown in the following drawings. In the following embodiment, like or similar reference numerals are assigned the same or similar elements as those of the above-described example, and description for an element appearing first will replace descriptions for like elements appearing later.

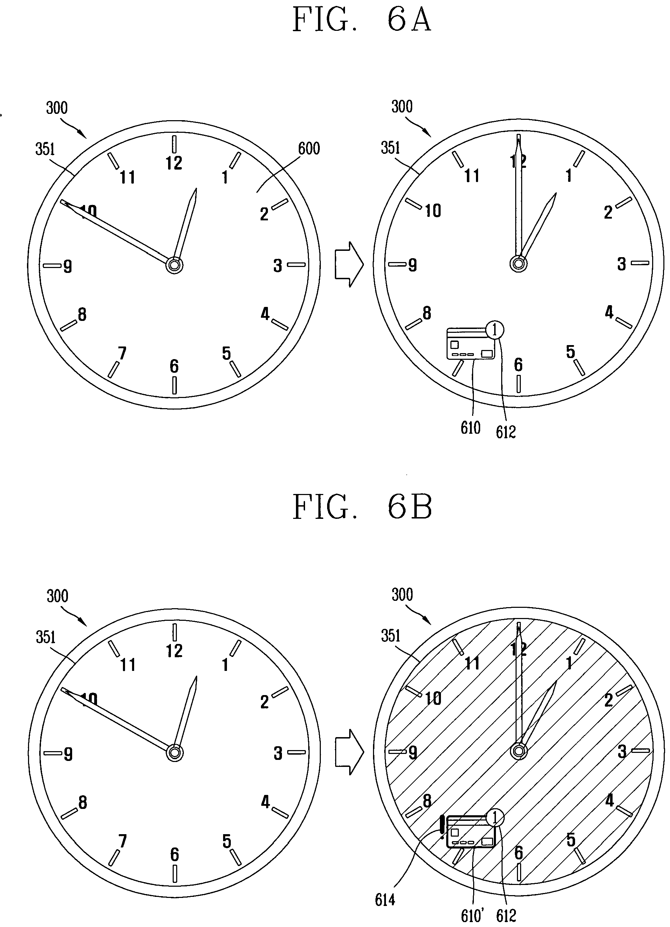

Next, FIGS. 6A to 6D are conceptual diagrams illustrating a mobile terminal that output a notification icon. Referring to FIG. 6A, screen information 600 is output to a touch screen 351 of a mobile terminal 300. The screen information denotes various kinds of visual information that may be output to the touch screen 151. However, for convenience of description, it is assumed that the screen information includes a plurality of indices indicating a time and at least two indication hands moving in order to show the current time.

The user can check the current time using the plurality of indices, the time hand, and the minute hand. It can be seen that the current time is 12:50 in the first figure of FIG. 6A, and the current time is 1:00 in the second figure of FIG. 6A. The controller 180 can determine whether an automatic transfer from a predetermined account is scheduled to be made within a reference time from the current time and control the touch screen such that a notification icon, which informs about the automatic transfer according to a result of the determination, is output in the screen information.

For example, when the reference time is set as 6 hours, and the automatic transfer is scheduled to be made according to payment of a card company at 7 o'clock, a notification icon 610 corresponding to the automatic payment may be newly represented in the screen information 600 when the current time is one o'clock. In more detail, when the current time reaches the reference time before the time at which the automatic transfer is scheduled to be made, the controller 180 controls the touch screen 351 such that the notification icon 610 is displayed in the screen information 600.

In this instance, the controller 180 can display the notification icon 610 at a position in which an index corresponding to the time at which the automatic transfer is scheduled to be made is displayed, such that the notification icon 610 informs about the time at which the automatic transfer is scheduled to be made. For example, as shown in FIG. 6A, the notification icon 610 may be output instead of numeral 7 indicating 7 o'clock.

In more detail, the notification icon 610 is output to an edge of the touch screen 351, and a position where the notification icon 610 is output varies depending on the time at which the automatic transfer is scheduled to be made. That is, a plurality of indices indicating a time are further included in the screen information 600, and the notification icon 610 is output to any one index corresponding to a time at which the automatic transfer is scheduled to be made among the plurality of indices.

That is, unlike that as shown in the figure, when the automatic transfer is scheduled at 6 o'clock, the notification icon 610 is output to a position where numeral 6 indicating 6 o'clock is output. The notification icon may have a different image depending on the type of the automatic transfer. Here, the different image denotes an image having, for example, a different shape, length, or color.

For example, when the automatic transfer is a card payment using a card, the notification icon may be a card image indicating the card or a trademark image of a payee who receives the card payment. That is, the type of the automatic transfer may be defined by the payee who receives savings deposited in the predetermined account through the automatic transfer.

The notification icon may include information regarding the number of scheduled automatic transfers. For example, when one automatic transfer is scheduled to be made, numeral information 612 showing that a total of one automatic transfer is scheduled to be made may be displayed in addition to the notification icon 610. As another example, when a first card payment and a second card payment are scheduled to be made by a first card company and a second card company at the same time, respectively, the controller 180 can display one notification icon and also display numeral information showing that a total of two automatic transfers are scheduled to be made.

When a plurality of automatic transfers from the predetermined account are scheduled to be made within the predetermined time from the current time, the controller 180 can output the notification icon in the screen information and may display information regarding the number of scheduled automatic transfers in the notification icon. The information regarding the number of automatic transfers denotes the numeral information.

The controller 180 can process the notification icon differently depending on a result of the comparison between the amount of savings in the predetermined account and the amount of money to be withdrawn through the automatic transfer. In more detail, when the amount of savings in the predetermined account is smaller than the amount of money to be withdrawn through the automatic transfer, the controller 180 highlights the notification icon. When the amount of savings in the predetermined account is greater than or equal to the amount of money to be withdrawn through the automatic transfer, the controller 180 does not highlight the notification icon. When the notification icon is highlighted, the notification icon may have a visual effect such as blinking, underlining, or color changing.

As shown in FIG. 6A, when the amount of savings in the predetermined account is greater or equal to the amount of money to be withdrawn through the automatic transfer, the unhighlighted notification icon 610 is output. Unlike this, when the amount of savings in the predetermined account is less than the amount of money to be withdrawn through the automatic transfer, the highlighted notification icon 610' is output, as shown in FIG. 6B. For example, the unhighlighted notification icon 610 may be displayed in blue, and the highlighted notification icon 610' may be displayed in red.

The highlighted notification icon 610' may further include an image 614 such as an exclamation mark in order to show the user that there is an error in the automatic transfer. Although not shown, the highlighted notification icon 610' may further include information regarding at least one of a total amount of savings in a predetermined account, a scheduled amount of money to be withdrawn through the automatic transfer, and a short amount of money corresponding to the difference between the total amount of savings and the scheduled amount of money.

Thus, the user can recognize an automatic transfer from which an overdue payment due to a lack of savings is likely to occur before the automatic transfer is made and may prepare in advance. When the automatic transfer is completed, the controller 180 controls the touch screen 351 such that the notification icon has disappeared.

When the automatic transfer is made, the bank server 410 transmits automatic transfer information associated with the automatic transfer. The automatic transfer information includes whether the automatic transfer has been successfully made and includes a failure reason when the automatic transfer fails. For example, when only some of the total amount of money to be scheduled is automatically transferred, the failure reason may include information regarding some amount that is transferred automatically, the remaining amount that is not transferred automatically, and the total amount.

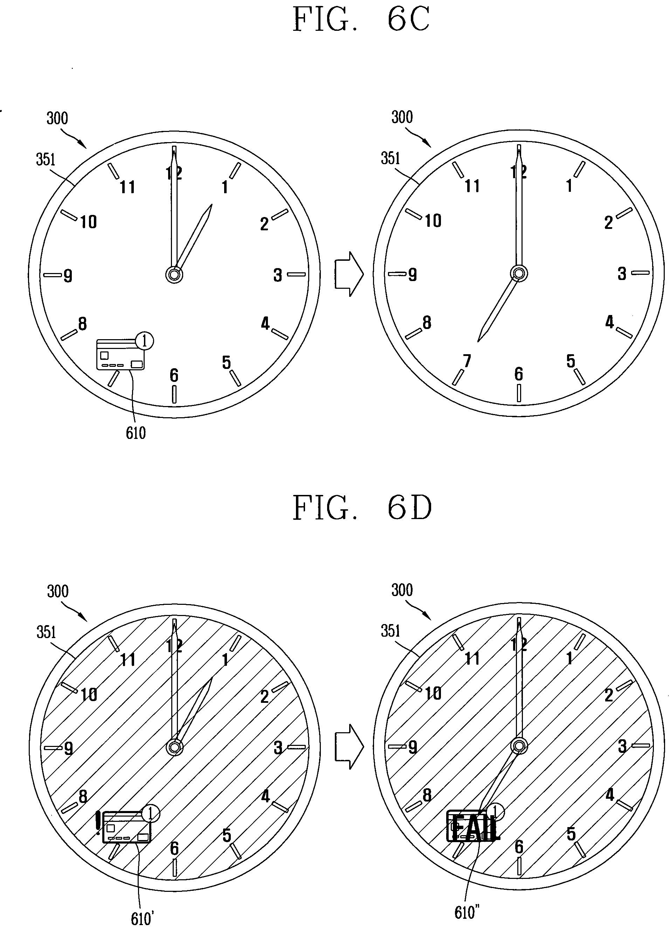

In order to receive the automatic transfer information, when a scheduled automatic transfer time is reached, the controller 180 can transmit a message for confirming whether the automatic transfer has been successfully made to the bank server 410. When it is confirmed, using the message, etc., that the automatic transfer has been successfully completed, the controller 180 controls the touch screen 351 such that the notification icon is not displayed. For example, as shown in FIG. 6C, when the automatic transfer scheduled to be made at 7 o'clock is completed, the notification icon has disappeared from the touch screen 351.

Unlike this, when it is confirmed, using the message, etc., that the automatic transfer has failed, as shown in FIG. 6D, the controller 180 can continue to output the notification icon and also additionally output fail information (e.g., "FAIL") showing that the automatic transfer has failed. In more detail, when it is checked that the automatic transfer has failed, the controller 180 can output guide information showing the failure of the automatic transfer in at least one of visual, auditory, and tactile manners.

When nonpayment occurs since the amount of savings in the predetermined account is smaller than the amount of money to be withdrawn through the automatic transfer, the controller 180 controls the touch screen such that the highlighted notification icon is output until the nonpayment is clear. Thus, the user can instantly confirm whether the automatic transfer has been successfully made. In consideration of a characteristic in which the terminal is worn on a wrist, the user can certainly recognize important information associated with the automatic transfer.

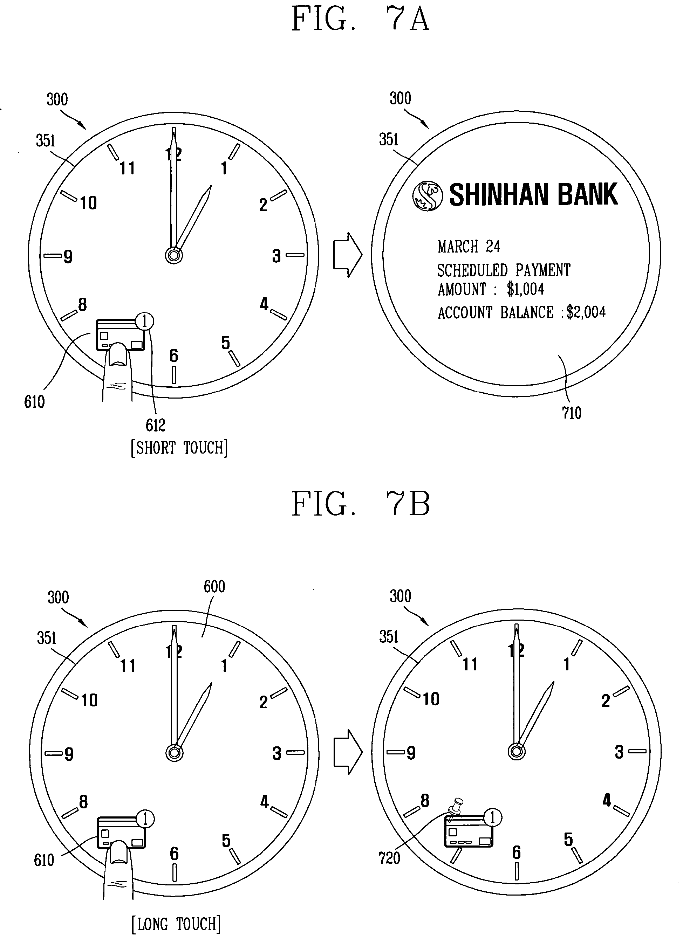

Embodiments of performing a different control function associated with the automatic transfer based on the touch input applied to the notification icon will be described in detail below. In particular, FIGS. 7A to 7E are conceptual diagrams illustrating a mobile terminal that performs different control functions associated with an automatic transfer based on a touch input applied to a notification icon.

As an example of such control, referring to FIG. 7A, when a first touch input is applied to the notification icon 610, detailed information 710 of the automatic transfer corresponding to the notification icon 610 may be output to the touch screen 351. For example, the first touch input may be a short touch input. The detailed information regarding the automatic transfer includes at least one of information regarding a predetermined account from which the automatic transfer is to be made, information regarding an amount of money deposited in the predetermined account, information regarding a payee that will receive the savings through the automatic transfer, information regarding an amount of money to be transferred automatically, and information regarding a time at which the automatic transfer is to be made.

The numeral information 612 included in the notification icon 610 may denote the number of automatic transfers that are not confirmed, that is, unconfirmed. For example, when there is one unconfirmed automatic transfer, the numeral information is '1.' When detailed information regarding the unconfirmed automatic transfer is output by the user input to the touch screen 351, the numeral information may be changed from '1' to '0.' When the notification icon may be displayed on the touch screen again, there is no unconfirmed automatic transfer, and thus the numeral information may not be displayed on the touch screen. That is, when the confirmation of the user is completed, the displaying of the numeral information is completed.

Referring to FIG. 7B, when a second touch input is applied to the notification icon 610, the controller 180 can transmit an automatic transfer suspension message to a predetermined server such that an automatic transfer corresponding to the notification icon 510 is suspended. The second touch input may be, for example, a long touch that is applied to a predetermined region of the touch screen during a predetermined time.

The predetermined server denotes the bank server 410, and the automatic transfer suspension denotes that the bank server 410 does not approve of the automatic transfer although the automatic transfer is requested from the payment server 420. When the automatic transfer is suspended, the automatic transfer is not made until a separate request is made by the user.

When the server approves of the automatic transfer suspension, the controller 180 can output suspension information 720 showing the automatic transfer suspension to the touch screen 351. For example, the suspension information 720 may include a 'pin image' such that the automatic transfer is stopped at a corresponding time and thus not made.

The user can confirm an amount of money to be transferred automatically through a first touch input. When there is an error in the amount of money to be transferred automatically or when the amount of money to be transferred automatically needs to be used in another place, the user can suspend and thus stop the automatic transfer.

When the screen information 600 is displayed on the touch screen 351, the suspension information 720 continues to be output in the screen information 600 until the automatic transfer is made. When the suspended automatic transfer is completed, the controller 180 completes the output of the suspension information 720. The controller 180 can confirm whether the suspended automatic transfer is completed in communication with the bank server 140.

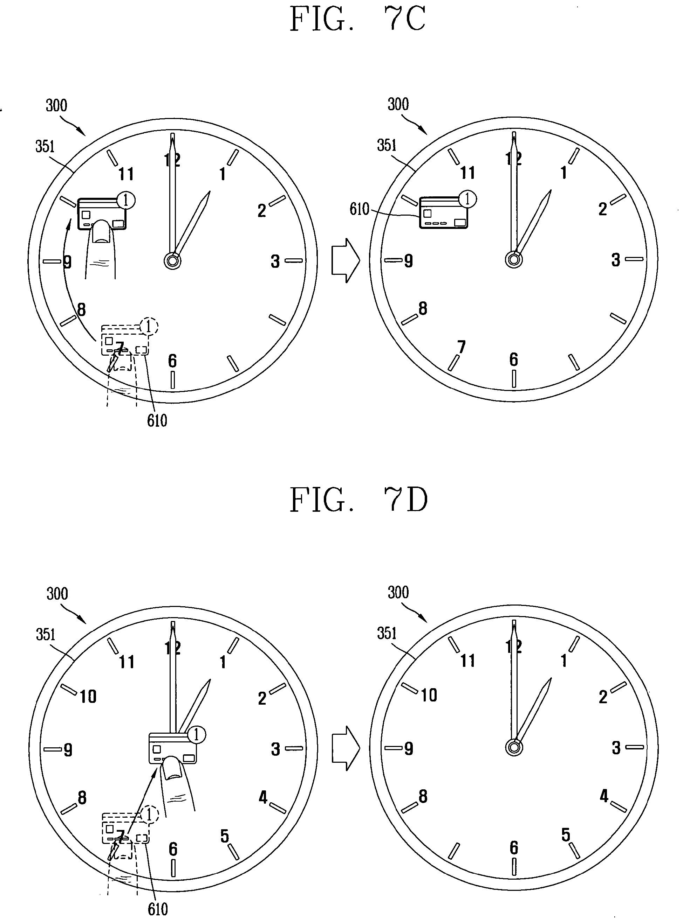

Referring to FIG. 7C, a third touch input may be applied to move the notification icon 610 from a first position of an edge of the touch screen 351 to a second position thereof. In this instance, the controller 180 transmits a time change message to the predetermined server such that a scheduled time of the automatic transfer corresponding to the notification icon 610 is changed to a time corresponding to the second position, in response to the third touch input. When the scheduled time for the automatic transfer is changed, the position of the notification icon 610 is output to the second position such that the changed time is shown.

In more detail, the controller 180 calculates a transfer time to be reset based on the third touch input and transmits the time change message to the predetermined server such that the scheduled time of the automatic transfer is changed to the calculated transfer time. The predetermined server changes the predicted time of the automatic transfer based on the time change message, and transmits a change completion message informing that the scheduled time has been changed to the mobile terminal. The controller 180 moves a display position of the notification icon 610 to a position corresponding to the changed transfer time in response to the change completion message.

For example, as shown in FIG. 7C, when a drag input for moving the notification icon 610 output to a position of numeral 7 to a position of numeral 10 is sensed, the controller 180 can change the scheduled time of the automatic transfer corresponding to the notification icon 610 from 7 o'clock to 10 o'clock. In addition, the controller 180 changes the display position of the notification icon 610 from the position of numeral 7 to the position of numeral 10. Thus, the user can reset the time at which the automatic transfer is to be made to his/her desired time.

Referring to FIG. 7D, the controller 180 can transmit an advance transfer message to the predetermined server such that the transfer is made before the scheduled time for the automatic transfer in response to a fourth touch input. The fourth touch input may be a drag input for moving the notification icon 610 from a first position where the notification icon 610 is displayed to a second position where a control point at which a hour hand and a minute hand are connected is displayed.

For example, as shown in FIG. 7D, when the drag input for moving the notification icon 610 of the automatic transfer scheduled to be made at 7 o'clock to the control point at which the hour hand and the minute hand are connected is sensed when the current time is one o'clock, the controller 180 can transmit the advance transfer message to the predetermined server such that the automatic transfer scheduled to be made at "7 o'clock" is instantly made. In addition, the controller 180 controls the touch screen 151 such that the display of the notification icon 610 is completed.

When the amount of savings in the predetermined account is smaller than the amount of money to be withdrawn through the automatic transfer, the controller 180 can output a graphic object corresponding to an electronic wallet (e.g., a secure element (SE)) in addition to the notification icon corresponding to the automatic transfer. This is to provide an interface for easily transferring a short amount of money from another account when nonpayment is likely to occur.

In more detail, when the automatic transfer is scheduled to be made within a reference time from the current time, the controller 180 controls the touch screen 351 such that the notification icon is displayed. Furthermore, when the amount of savings in an account from which the automatic transfer is made is smaller than the amount of money to be withdrawn through the automatic transfer, the controller 180 controls the touch screen 351 such that the highlighted notification icon 610' is displayed and controls the touch screen 351 such that the notification icon and a graphic object corresponding to the electronic wallet are output at the same time.

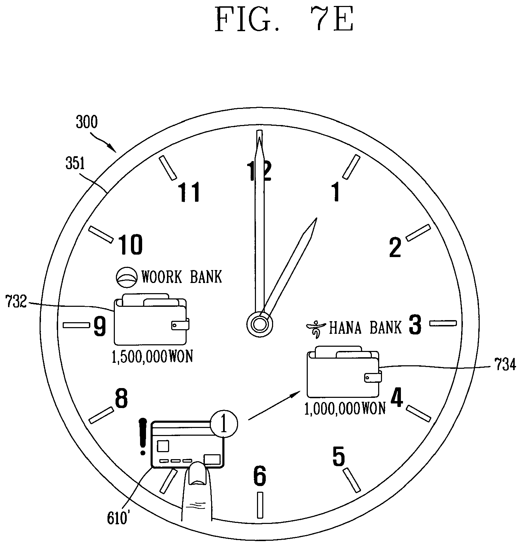

For example, as shown in FIG. 7E, when the highlighted notification icon 610' is displayed, graphic objects 732 and 734 corresponding to a predetermined electronic wallet in the mobile terminal 300 can be output in the screen information 600. When the number of predetermined electronic wallets is two or more, at least one of graphic objects corresponding to the electronic wallets may be output. For example, a first graphic object 732 corresponding to a first electronic wallet and a second graphic objet 734 corresponding to a second electronic wallet may be output in the screen information 600.

A graphic object corresponding to the electronic wallet includes information regarding the type of the electronic wallet or a balance changed or deposited in the electronic wallet. For example, it is assumed that the first graphic object 732 opened by Woori Bank has a balance of 1,500,000 South Korean won (KRW), the second graphic object 734 opened by Hana Bank has a balance of 1,000,000 KRW, and a short amount of money for the automatic transfer scheduled to be made at 7 o'clock is 100,000 KRW.

When a fifth touch input is sensed while the notification icon and the graphic object are displayed, the controller 180 transmits a transfer message to a predetermined server such that at least some of savings of the electronic wallet are transferred to the predetermined account. In more detail, the controller 180 calculates a short amount of money for the automatic transfer and transmits the transfer message to the predetermined server such that the calculated short amount of money is transferred from the electronic wallet to the predetermined account.

Here, the fifth touch input may be a gesture of dragging and dropping the graphic object to the notification icon or a gesture of dragging and dropping the notification icon 610' to the graphic object. For example, as shown in FIG. 7E, when a touch input of dragging and dropping the highlighted notification icon 610' to a position where the second graphic object 734 is displayed is sensed, the controller 180 transmits a transfer message to a predetermined server such that 100,000 KRW corresponding to a short amount of money is transferred from a second electronic wallet to a predetermined account from which the automatic transfer is scheduled to be made.

The predetermined server transfers the short mount from the second electronic wallet to the predetermined account in response to the transfer message. When the transfer is completed, the predetermined server delivers a transfer completion message to the mobile terminal. The controller 180 completes the highlighting of the notification icon in response to the transfer completion message. That is, the highlighted notification icon 610' is changed to the unhighlighted notification icon 610. This is because the savings in the predetermined account is greater than or equal to the amount of money to be withdrawn through the automatic transfer when the short amount of money is transferred from the electronic wallet to the predetermined account.

Thus, the user can be aware in advance that an overdue payment will occur due to the automatic transfer, check balance information regarding accounts owned by the user, and easily transfer a short amount of money from another account to an account from which the automatic transfer is set.

The mobile terminal according to an embodiment of the present invention can provide a new interface for a financial transaction associated with the automatic transfer because different functions associated with the automatic transfer are executed depending on a touch input applied to the notification icon. The new interface can enhance user convenience because a financial transaction associated with the automatic transfer is performed not by a financial institution by which an account is opened, but by a payer who is an owner of the account.

The present invention is not limited to the above-described touch inputs and control functions corresponding thereto. However, the predetermined touch inputs and the corresponding control functions may be changed variously depending on the embodiment. Any touch input corresponding to a specific control function may be reset by the user as another touch input. For example, the touch input associated with the automatic transfer suspension may be changed from a long touch to a short touch. The mobile terminal according to an embodiment of the present invention may provide an interface for resetting a touch input corresponding to a specific control function.

The mobile terminal according to an embodiment of the present invention may sense a predetermined user gesture applied while the mobile terminal is worn on a specific body part of the user, and thus continuously receive biometric information (e.g., a biometric signal such as a pulse) of the user according to the wear.

Accordingly, the controller 180 can check in advance whether a wearer of the mobile terminal is a user that can use an electronic wallet and may determine whether information associated with the automatic transfer is displayed and/or whether a control function associated with the automatic transfer is executed according to a result of the check. In other words, only when the wearer is a predetermined user, the controller 180 can display the notification icon corresponding to the automatic transfer or execute a control function corresponding to a touch input applied to the notification icon.

When the wearer is not the predetermined user, the controller 180 limits the display of the notification icon corresponding to the automatic transfer or ignores a predetermined touch input applied to the notification icon although the notification icon is displayed. That is, when a predetermined touch input is applied to the notification icon, but the wearer is not the predetermined user, the controller 180 limits the execution of a function corresponding to the predetermined touch input.

Thus, the user can quickly proceed with a function associated with the automatic transfer without a separate authentication operation and may block, in advance, financial information from being leaked to a third party or a financial transaction from being made by the third party.

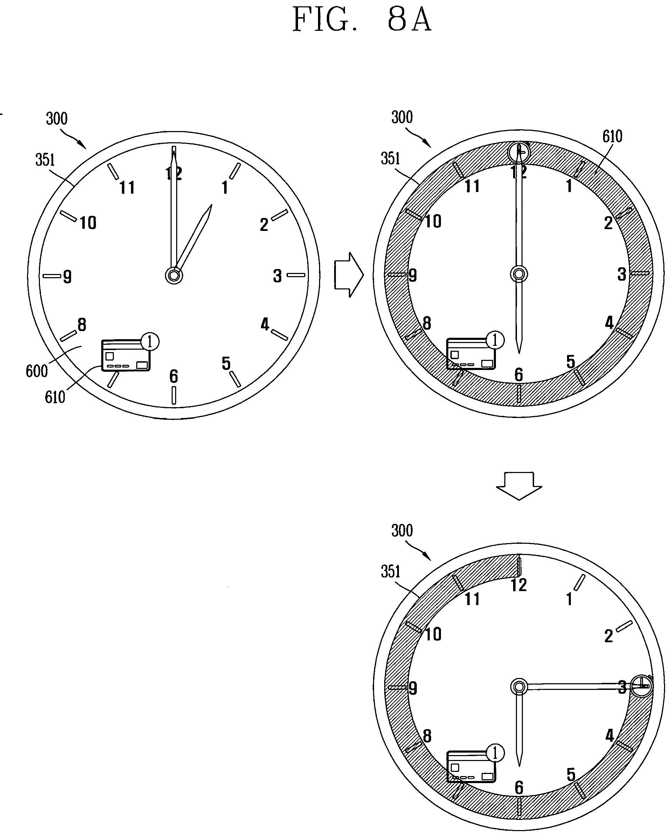

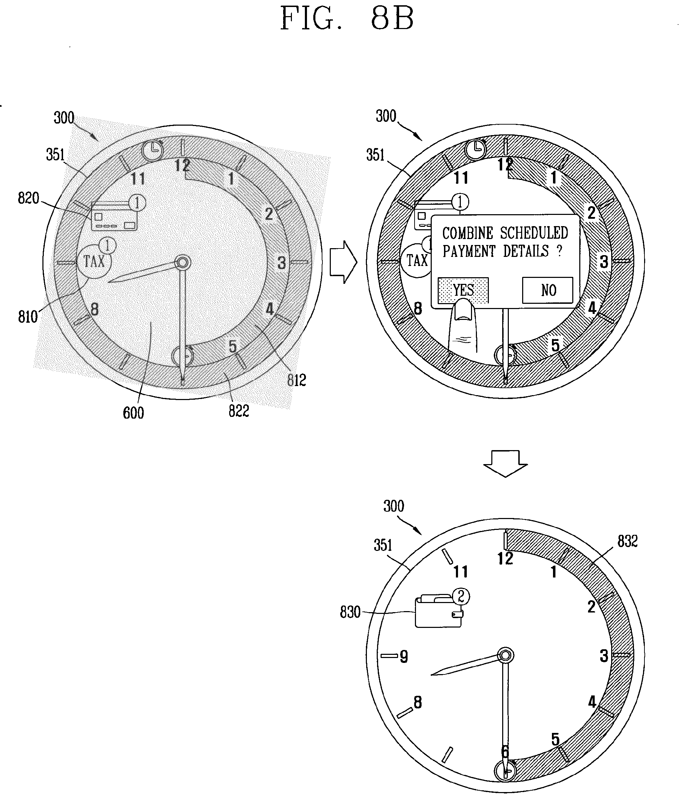

FIGS. 8A and 8B are conceptual diagrams illustrating a mobile terminal that outputs a notification associated with an automatic transfer. When the automatic transfer from a predetermined account within a reference time from the current time is scheduled to be made while the screen information 600 including at least one of a hour hand, a minute hand, and a plurality of indices is displayed, the controller 180 displays a notification icon 610 corresponding to the automatic transfer in the screen information 600.

Furthermore, when the automatic transfer from the predetermined account is scheduled to be made within the predetermined time from the current time, the controller 180 can display an image having a length that gradually changes over time at the edge of the touch screen. Here, the predetermined time and the reference time may be set differently. When the predetermined time and the reference time are set differently, it is determined, by the reference time, whether the notification icon is output, and it is also determined, by the predetermined time, whether an image having a length that gradually changes over time is output.

For example, as shown in FIG. 8A, the reference time may be set as 6 hours, and the predetermine time may be set as 1 hour. In this instance, when the current time is within 6 hours, the notification icon 610 is displayed. When the current time is within one hour, the notification icon 610 and an image 810 having a length that gradually changes over time are output.

When the image 810 begins to be displayed, the controller 180 can further output a notification in an auditory or tactile manner. Thus, the user can be aware, through the image 810, that a time at which the automatic transfer is to be made is drawing near. When there are a plurality of automatic transfers scheduled to made at different times, a plurality of notification icons corresponding to the plurality of automatic transfers may be displayed in the screen information 600. In addition, a plurality of images corresponding to the plurality of automatic transfers may be displayed in the screen information.

For example, as shown in FIG. 8B, when a first automatic transfer is scheduled to be made at 9:00, a second automatic transfer is scheduled to be made at 9:30, and the current time is 8:30, a first graphic object 810 corresponding to the first automatic transfer and a second graphic object 830 corresponding to the second automatic transfer may be output in the screen information 600. Furthermore, a first image 812 corresponding to the first automatic transfer and a second image 822 corresponding to the second automatic transfer are displayed, and the first and second images 812 and 822 have lengths that gradually change over time.

As the number of automatic transfers scheduled increases, the notification occurs frequently, and thus this may cause inconvenience. In addition, as the number of notification icons and/or images corresponding to the automatic transfers increases, this causes information displayed on the touch screen 151 to be complicated.

In order to prevent this, when a first touch is applied to the first image 812, a second touch is applied to the second image 822, and the first touch and the second touch moves in a direction toward each other, the controller 180 integratedly displays information associated with the first automatic transfer and information associated with the second automatic transfer. For example, a third graphic object 830 may be displayed instead of the first and second graphic objects 810 and 820, and a third image 832 may be displayed instead of the first and second images 812 and 822.

In this instance, when a predetermined touch input is applied to the third graphic object 830, the controller 180 executes a control function corresponding to the predetermined touch input for each of the first and second automatic transfers. For example, when the second touch input is applied to the third graphic object 830, the first and second automatic transfers are suspended together. When the first and second automatic transfers are suspended by the second touch input, the length of the third image is maintained without changing over time. This is because the payment through the automatic transfer is stopped. The user can manage the plurality of automatic transfers as one group, and thus enhance user convenience.

As described above with reference to FIGS. 7A to 7E, the mobile terminal according to an embodiment of the present invention may execute a control function associated with the automatic transfer based on the touch input applied to the notification icon. The mobile terminal according an embodiment of the present invention may be configured to receive a password from the user before executing a control function associated with the automatic transfer in order to perform a financial transaction more safely.

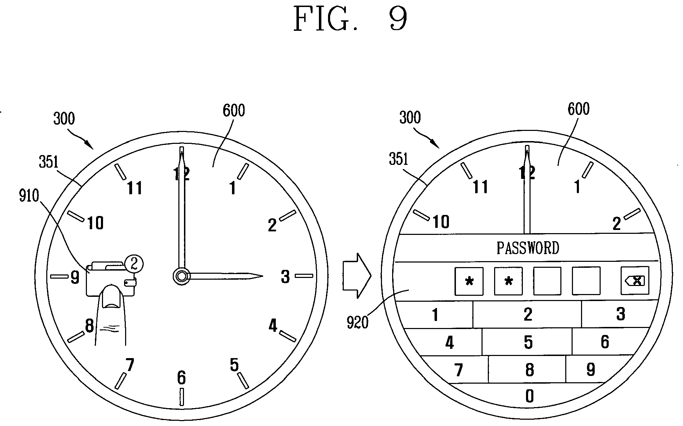

FIG. 9 is conceptual view illustrating a mobile terminal that receives a password before performing a control function associated with an automatic transfer. Referring to FIG. 9, the notification icon 910 may be output in the screen information 600. When a predetermined touch input is applied to the notification icon 910, the controller 180 can limit the execution of a control function corresponding to the predetermined touch input and may output a password input window 920 formed to receive the password.

In the password input window 920, a soft key including at least one of a character, a numeral, and a symbol may be displayed in a certain arrangement in order to receive the password. That is, the password input window 920 may be a virtual keypad including a plurality of soft keys.

When a predetermined password is input through the password input window 920, the controller 180 executes a control function corresponding to the predetermined touch input. When the predetermined password is not input, the controller 180 ignores the predetermined touch input and does not execute a control function corresponding to the predetermined touch input. Thus, it is possible to leak financial information associated with the automatic transfer to a third party or to block in advance a third party from maliciously performing a financial transaction.

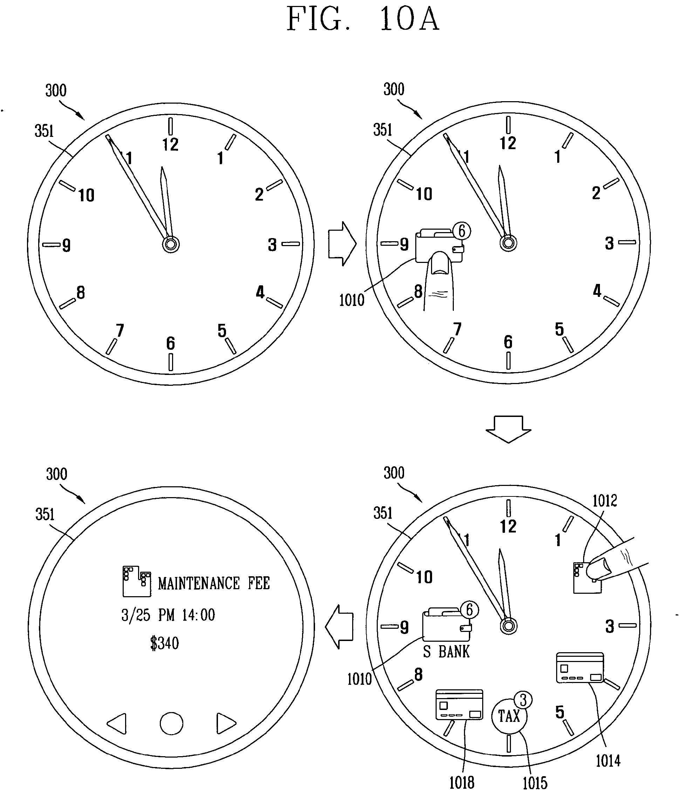

FIGS. 10A to 12B are conceptual diagrams illustrating an operation of a mobile terminal when a plurality of automatic transfers are scheduled. Referring to FIG. 10A, the controller 180 can output a graphic object 1010 corresponding to an electronic wallet when a predetermined condition is satisfied. The predetermined condition may include when a user request for requesting the output of the graphic object 1010 is applied to the mobile terminal or when the automatic transfer in the electronic wallet is scheduled to be made within the reference time from the current time. The predetermined condition may be changed variously depending on the embodiment.

The graphic object 1010 may include numeral information showing the number of automatic transfers to be automatically withdrawn from the electronic wallet within the reference time from the current time. For example, as shown in FIG. 10A, numeral 6 displayed along with the graphic object 101 shows that six automatic transfers to the electronic wallet corresponding to the graphic object 1010 are scheduled to be made within the reference time from the current time. The numeral number varies depending on the number of scheduled automatic transfers.

In addition, the graphic object 101 may include financial information regarding at least one of a name of the electronic wallet corresponding to the graphic object 101, a name of a bank that manages the electronic wallet, an account number, and a balance charged or deposited in the electronic wallet. The financial information may be output only when the mobile terminal is worn by a predetermined user. Thus, the financial information is blocked from becoming known to a third party other than the predetermined user. In order to determine whether the mobile terminal is worn by the predetermined user, the mobile terminal includes a sensing unit that may sense physical information of the user when the mobile terminal is worn by the predetermined user.

When a predetermined touch input is sensed in the graphic object 1010, the controller 180 outputs information regarding an automatic transfer in which a withdrawal is scheduled to be made from the electronic wallet corresponding to the graphic object 1010. In more detail, the controller 180 outputs a notification icon corresponding to the automatic transfer to a position corresponding to the time at which the automatic transfer is scheduled.

An example, in which a first automatic transfer through which a withdrawal of a monthly rent is scheduled to be made at 2 o'clock, a second automatic transfer through which a withdrawal of a card payment for a first card company is scheduled to be made at 4 o'clock, third to fifth automatic transfers through which a withdrawal of utility bills is scheduled to be made at 6 o'clock, and a sixth automatic transfer through which a withdrawal of a card payment for a second card company is scheduled to be made at 7 o'clock are scheduled for the electronic wallet corresponding to the graphic object 1010, will be described with reference to FIG. 10A.

In this instance, a first notification icon 1012 corresponding to the first automatic transfer is output to a position of numeral 2 indicating 2 o'clock, a second notification icon 1014 corresponding to the second automatic transfer is output to a position of numeral 4 indicating 4 o'clock, a third notification icon 1016 corresponding to the third to fifth automatic transfers is output to a position of numeral 6 indicating 6 o'clock, and a fourth notification icon 1018 corresponding to the sixth automatic transfer is output to a position of numeral 7 indicating 7 o'clock.

When a plurality of automatic transfers having the same type are scheduled to be made at the same time, one notification icon is displayed, and numeral information showing the plurality of automatic transfers is displayed along with the notification icon. In response to a predetermined touch input applied to the graphic object 1010, the controller 180 can generate an animation effect for the graphic object 1010 in which the first to sixth graphic objects move to respective positions. The user can feel as if a wallet is opened.

When a touch is applied to any one of the first to fourth notification icons 1012 to 1018, the controller 180 controls the touch screen 351 to display detailed information regarding an automatic transfer corresponding to the notification icon. For example, when the first notification icon 1012 is touched, the controller 180 displays detailed information regarding the first automatic transfer on the touch screen 351.

The detailed information may include at least one of a name of the first automatic transfer, a payee who will receive a transfer of the savings, a scheduled amount of money to be automatically transferred, a time at which the automatic transfer is to be made, details of the savings having been transferred to a corresponding payee during a predetermined time, and an average amount of savings transferred to a corresponding payee during a predetermined time.

When a touch input of continuously moving from a first position to a second position is applied while detailed information regarding any one automatic transfer is displayed on the touch screen 351, the controller 180 displays detailed information regarding another automatic transfer on the touch screen 351, instead of the detailed information regarding the automatic transfer.

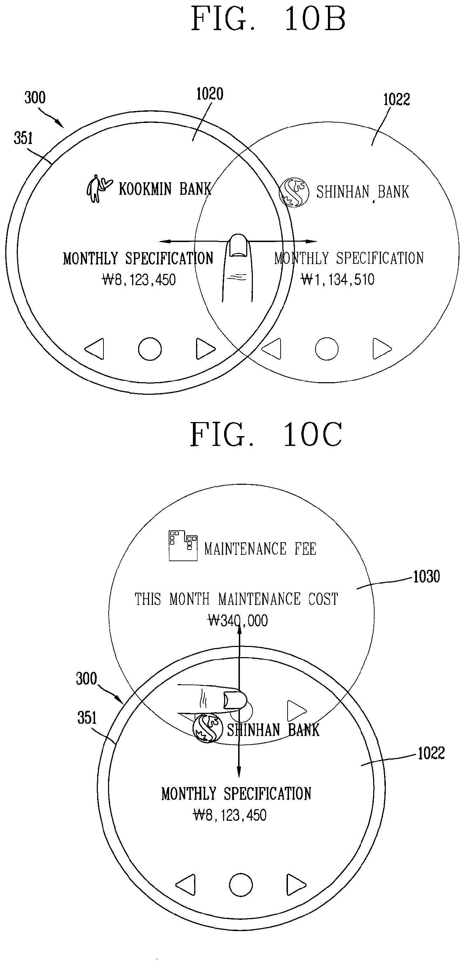

Referring to FIG. 10B, when a touch input of moving from left to right or from right to left is applied, the controller 180 displays detailed information regarding another automatic transfer among automatic transfers having the same type. For example, the second and sixth automatic transfers for the card payments may be grouped as automatic transfers having the same type. When a touch input of moving from side to side while second detailed information 1020 corresponding to the second automatic transfer, sixth detailed information corresponding to the sixth automatic transfer is output, instead of the second detailed information 1020.

Referring to FIG. 10C, when a touch input of moving down or up is applied, the controller 180 displays detailed information regarding another automatic transfer among automatic transfers having a different type from any one automatic transfer being displayed. For example, the automatic transfers having a different type from the second automatic transfer for the card payment include the third to fifth automatic transfers (that is, the remaining automatic transfers other than the second and sixth automatic transfers). When a touch input of moving up and down is applied while the second detailed information 1020 corresponding to the second automatic transfer is displayed, detailed information 1030 corresponding to any one of the first, third, and fourth automatic transfers is output, instead of the second detailed information 1020.

In addition, when a predetermined touch input is applied to the graphic object 1010 while notification icons are displayed, the controller 180 completes the display of the notification icons. In this instance, an animation effect is generated in which the notification icons move into the electronic wallet, thus allowing the wallet to be shown as if the wallet is opened and then closed. Thus, the user can simply and quickly check information regarding the plurality of automatic transfers that are scheduled for a specific electronic wallet.

When the plurality of electronic transfers are scheduled for the electronic wallet, the controller 180 can calculate the entire scheduled amount of money to be withdrawn through the automatic transfers and may determine whether the nonpayment for the at least one automatic transfer will occur based on a total amount for savings deposited in the electronic wallet. For example, when the entire scheduled amount of money is greater than the total amount of savings, the controller 180 can determine that the nonpayment will occur.

As a result of the determination, the controller 180 can determine to highlight a graphic object corresponding to the electronic wallet. In more detail, when the nonpayment for at least one automatic transfer is likely to occur, the controller 180 highlights the graphic object corresponding to the electronic wallet. When the nonpayment is not likely to occur, the controller 180 does not highlight the graphic object.

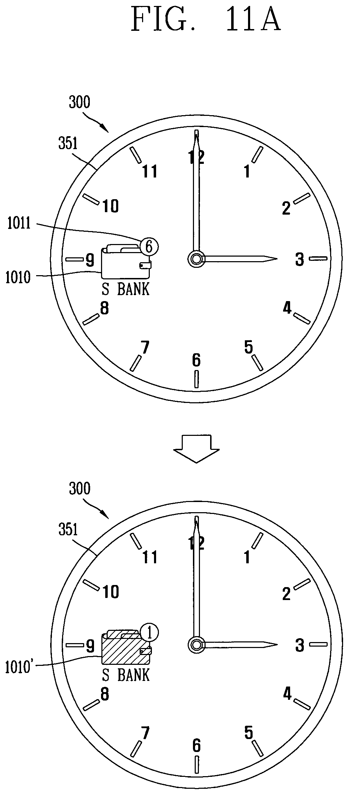

For example, when the nonpayment for at least one automatic transfer is not likely to occur while six automatic transfers are scheduled to be made, the unhighlighted notification icon 1010 is displayed, as shown in the first figure of FIG. 11A. In this instance, the unhighlighted notification icon 1010 may include numeral information (e.g., 6) showing the number of scheduled automatic transfers.

An another example, when the nonpayment for at least one automatic transfer is likely to occur while six automatic transfers are scheduled to be made, the highlighted notification icon 1010' is displayed, as shown in the second figure of FIG. 11A. In this instance, the highlighted notification icon 1010' may include numeral information (e.g., 1) showing the number of automatic transfers for which the nonpayment occurs.

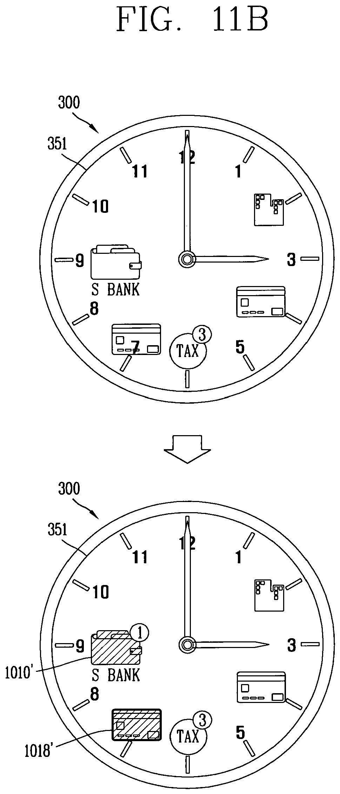

As shown in FIG. 11B, the notification icon corresponding to the automatic transfer may be highlighted according to the possibility that the nonpayment of the automatic transfer will occur. That is, a notification icon of an automatic transfer for which the nonpayment is likely to occur is highlighted, and a notification icon of an automatic transfer for which the nonpayment is not likely to occur is not highlighted. For this, the controller 180 determines a nonpayment occurrence possibility of each of the plurality of automatic transfers based on a time at which the automatic transfer is scheduled to be made.

For example, when a scheduled amount of money in the first automatic transfer is 10 USD, a scheduled amount of money in the second automatic transfer is 20 USD, a scheduled amount of money in the third automatic transfer is 30 USD, a scheduled amount of money in the fourth automatic transfer is 40 USD, a scheduled amount of money in the fifth automatic transfer is 50 USD, and a scheduled amount of money in the sixth automatic transfer is 60 USD while the total amount of savings is 300 US Dollar (USD), there is no possibility that nonpayment for all of the automatic transfers will occur. In this instance, as shown in the second figure of FIG. 11B, the first to fourth notification icons are not highlighted.

Unlike this, when the scheduled amount of money for the sixth automatic transfer is 160 USD, as shown in the second figure of FIG. 11B, there is no possibility that nonpayment for the first to fifth automatic transfers will occur while there is a possibility that nonpayment for the sixth automatic transfer will occur. A total sum of the amounts of money to be scheduled to be transfer is 310 USD, which is greater than a total amount of savings, which is 300 USD. In this instance, the controller 180 highlights only the fourth graphic object (1018').

Thus, the user can be intuitively aware of whether there is an automatic transfer for which nonpayment will occur depending on whether the highlighting is performed. The user can be aware of a nonpayment possibility using the first to fourth notification icons and may apply a predetermined touch input to any one notification icon, thus executing a control function for an automatic transfer corresponding to the notification icon. That is, the user can execute the control functions described above with reference to FIGS. 7A to 7E.

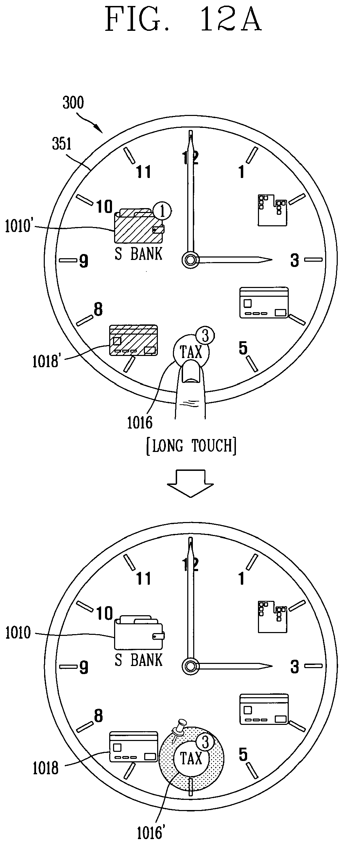

For example, as shown in FIG. 12A, when the above-described second touch input is applied to the third notification icon 1016 with reference to FIG. 7B, the controller 180 transmits an automatic transfer suspension message to a predetermined server such that an automatic transfer corresponding to the third notification icon 1016 is suspended. Since the third notification icon 1016 includes the third to fifth automatic transfers, the third to fifth automatic transfers are suspended by the second touch input.

Thus, the sixth automatic transfer is switched from a state in which there is a nonpayment occurrence possibility to a state in which there is no nonpayment occurrence possibility. This is because the total amount of money becomes smaller than the entire scheduled amount of money (i.e. a total sum of scheduled amounts of money for the first, second, and sixth automatic transfers) because of the suspension of the third to fifth automatic transfers. When the third to fifth automatic transfers are suspended by the second touch input, the controller 180 displays suspension information indicating suspension in the first notification icon (1016→1016') and unhighlights the fourth notification icon (1018'→1018).

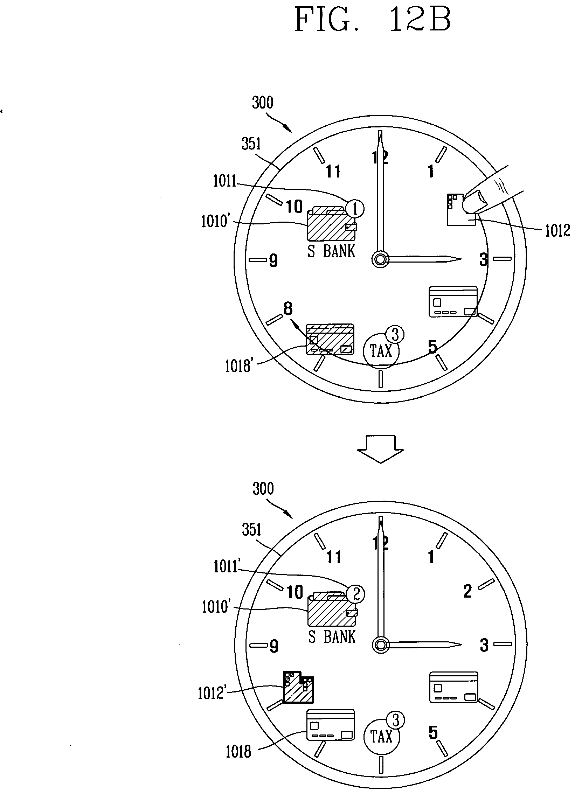

As another example, as shown in FIG. 12B, when a third touch input of moving the first notification icon 1012 from a 2 o'clock position to an 8 o'clock, the controller 180 transmits a time change message to the predetermined server such that a transfer time of the first automatic transfer corresponding to the first notification icon 1016 is changed from 2 o'clock to 8 o'clock.

As the transfer order is changed, the controller 180 determines a nonpayment occurrence possibility of each automatic transfer again. When a transfer order of the first automatic transfer is changed from the first order to the sixth order, an automatic transfer having the nonpayment occurrence possibility becomes the sixth automatic transfer. This is because a total scheduled transfer amount of money for the second to sixth automatic transfers becomes equal to the total amount of savings. Thus, the first notification icon is highlighted at the same time the display of the first notification icon is changed (1012→1012'), and then the fourth notification icon is unhighlighted (1018'→1018).

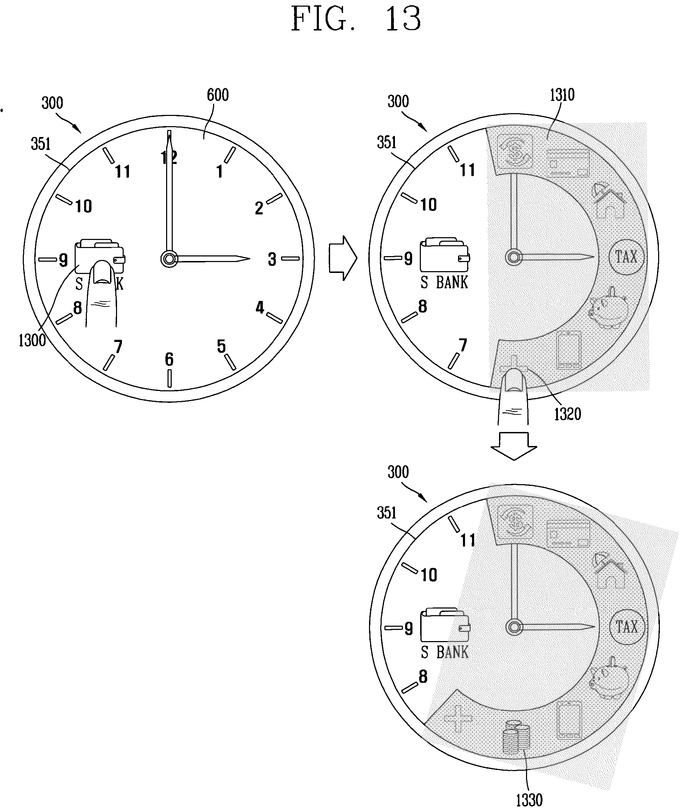

FIGS. 13 to 15 are conceptual diagrams illustrating a mobile terminal that provides a novel interface associated with automatic transfer. The mobile terminal according to an embodiment of the present invention may also provide a user interface for registering a new automatic transfer in an electronic wallet. For example, as shown in FIG. 13, an editing mode for the electronic wallet may be executed by a predetermined user request. The predetermined user request may be a long touch on a graphic object 1300 corresponding to the electronic wallet, but may be changed variously depending on the embodiment.

When the editing mode is executed, icons corresponding to automatic transfers registered in the electronic wallet are displayed. As such example, FIG. 13 shows an example in which six different automatic transfers are registered. In this instance, six graphic objects corresponding to the six different automatic transfers may be displayed in the screen information 600. The six graphic objects may be displayed in regions where different indices have been displayed. Since the number of graphic objects to be output in the screen information 600 is six, six different indices (i.e., numeral 1 to numeral 6) which have been output in the screen information 600 are transformed into the icons. In this instance, the icons may be displayed in a clockwise direction in the order in which the automatic transfers are registered.

In more detail, when the editing mode is executed, the controller 180 can set a portion of the entire region of the touch screen as the icon display region 1310 for outputting icons and may output the icons in the icon display region 1310. When the editing mode is executed, an image having a size that gradually changes along an outer circumference of the touch screen 351, and the graphic objects are displayed sequentially as the size of the image increases. Information is provided in the form in which the image is unfolded, and the icons are displayed sequentially. As a more detailed example, an effect in which a folded paper gets unfolded by executing the editing mode may be assigned to the image. The image may be used to distinguish between the icon display region 1310 and the remaining regions other than the icon display region 1310.

An indication "+" is generated in the icon display region 1310 to register a new automatic transfer. In this instance, when the indication "+" is touched, an interface for registering the new automatic transfer in the electronic wallet is provided. The new automatic transfer is registered in the electronic wallet based on a user input applied to the interface. A corresponding icon 1330 is added to the icon display region 1310.

The mobile terminal according to an embodiment of the present invention may divide the plurality of automatic transfers into first and second groups. The first group includes an automatic transfer that is set to output a notification icon, and the second group includes automatic transfer that is set not to output a notification icon.

In addition, the mobile terminal may move the automatic transfers included in the second group to the first group, or may provide a user interface for moving the automatic transfers included in the first group to the second group. The user can use the user interface to set whether the notification icon for at least one automatic transfer is output. For example, the user can edit the setting for the automatic transfer in which the notification icon has not been output, such that the notification icon is output. When the automatic transfer is set such that the notification icon is not output, the notification icon of the automatic transfer is not displayed in the screen information although the automatic transfer is scheduled to be made within a reference time from the current time.

The mobile terminal according to an embodiment of the present invention may display details of any one of a plurality of automatic transfers registered in the electronic wallet based on a user input. The mobile terminal according to an embodiment of the present invention may communicate with the payment server 420 (see FIG. 4), and may calculate an accumulative amount of money, which is to be automatically transferred, with respect to a specific automatic transfer or receive the accumulative amount of money calculated by the payment server 420 from the payment server 420.

When an automatic transfer is set for a card payment, a scheduled amount of money to be automatically transferred may vary depending on card usage. The controller 180 can calculate a scheduled amount of money to be automatically transferred upon the automatic transfer and may inform the user of the calculated scheduled amount of money.

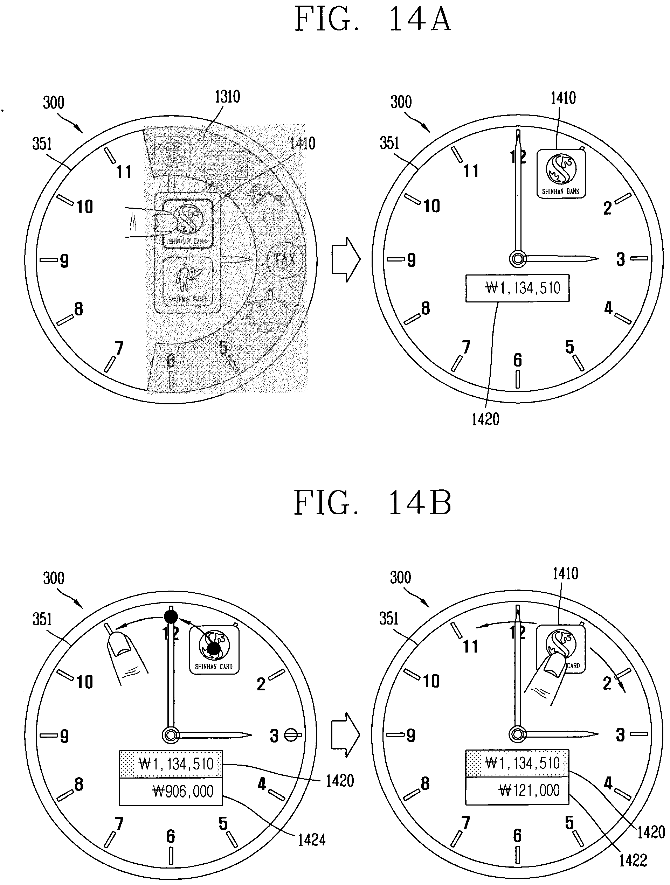

For example, as shown in FIG. 14A, when a touch is applied to any one icon 1410 while icons corresponding to automatic transfers registered in the electronic wallet are displayed, the controller 180 can display, in the screen information, scheduled amount information 1420 about the scheduled amount of money to be automatically transferred with respect to a specific automatic transfer corresponding to the icon 1410.

When a touch input of moving the icon 1410 to any point of the touch screen 351 is sensed while the scheduled amount information 1420 is displayed, the controller 180 can output past transfer amount information 1422 regarding an amount of money that has been previously transferred due to the specific automatic transfer based on the point.

The past transfer amount information varies depending on the point. For example, when the icon 1410 is displayed at a position of numeral 1 indicating one o'clock, the scheduled amount information 1420 indicates a scheduled amount of money for an nth transfer. When a touch input of moving the icon 1410 to a position of numeral 12 indicating 12 o'clock is sensed, the controller 180 outputs transfer amount information 1422 for an (n-1)th transfer as the past transfer amount information. When a touch input of moving the icon 1410 to a position of numeral 11 indicating 11 o'clock is sensed, the controller 180 outputs transfer amount information 1424 for an (n-2)th transfer as the past transfer amount information.

In addition, the controller 180 can store details of the automatic transfers and may calculate an automatic transfer pattern and an average automatic transfer amount of money. For example, when 100 USD is transferred for the first automatic transfer, and 80 USD is transferred for the second automatic transfer, an average amount of money of a corresponding automatic transfer may be calculated as 90 USD.

The controller 180 can compare the calculated average amount of money with an accumulative amount of money. When the accumulative amount of money is greater than the average amount of money, the controller 180 can output alarm information indicating excessive consumption. In more detail, the controller 180 can calculate an average amount of money for each of the plurality of automatic transfers set in the electronic wallet and may compare the calculated average amount of money with a respective accumulative amount of money.

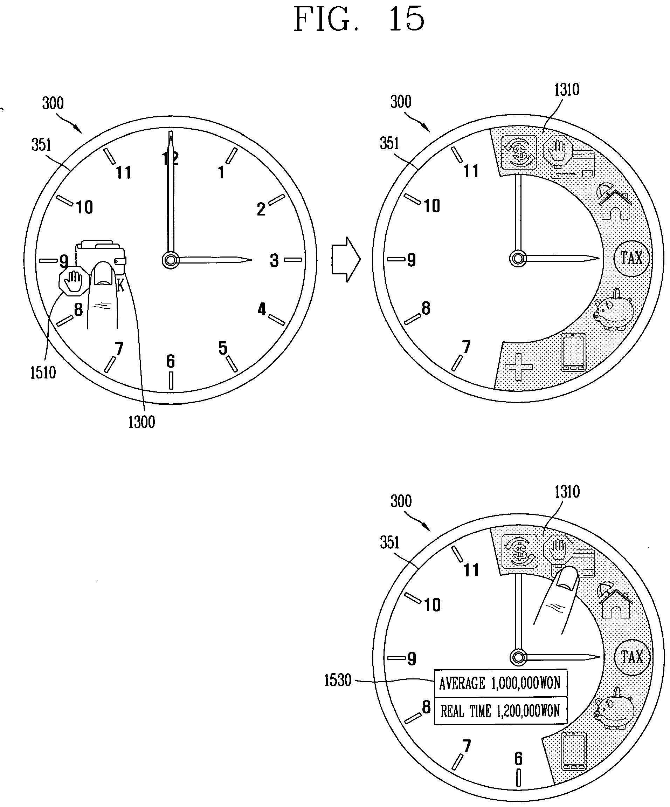

As shown in the first figure of FIG. 15, on a condition that the graphic object 1300 of the electronic wallet is displayed, the controller 180 can output the alarm information 1510 along with the graphic object 1300 when an accumulative amount of money of at least one of the automatic transfers is greater than the average amount of money.

As shown in the second figure of FIG. 15, on a condition that icons (or notification icons) for the registered automatic transfers are output, the controller 180 can output the alarm information 1510 along with a corresponding icon when an accumulative amount of money of at least one automatic transfer is greater than the average amount of money.

The user can check why the alarm information 1510 is output by applying a touch to the corresponding icon. In other words, the controller 180 can specifically display an average amount of money and an accumulative amount of money in response to the touch applied to the corresponding icon (1530). The average amount may be replaced with a reference amount of money set by the user.

The embodiment of the present invention provide the following advantages. For example, it is possible to prevent in advance a financial accident caused by the automatic transfer and take an advance action for preventing nonpayment due to a lack of savings by outputting in advance an automatic transfer alarm before performing the automatic transfer. In addition, it is also possible to necessarily check the automatic transfer alarm by providing the automatic transfer alarm in various ways.

Since various control functions associated with the automatic transfer are performed depending on the type of a touch input applied to the notification icon, the user can simply and briefly perform a financial transaction associated with the automatic transfer. Also, since an amount of money (e.g., card payment, maintenance fees, communication expense, a bank loan, etc.) to be automatically transferred every month is displayed on the touch screen before the automatic transfer, the user can be allowed to check an amount of money to be automatically transferred before the automatic transfer. Thus, when the user can take an action to suspend the automatic transfer or deposit in advance an appropriate amount of money in an account from which the automatic transfer is scheduled to be made.

Since the edge of the touch screen serves as a time line, and the notification icon is displayed at one point corresponding to a time at which the automatic transfer is scheduled out of the edge of the touch screen, the user can be intrusively aware of a time at which the automatic transfer is scheduled to be made. In addition, an image of the notification icon changes depending on the payee, and thus a lot of information may be delivered to the user using a touch screen having a narrow physical space.

The effect of the present invention is not limited to the aforesaid, but other effects not described herein will be clearly understood by those skilled in the art from descriptions below. Various embodiments may be implemented using a machine-readable medium having instructions stored thereon for execution by a processor to perform various methods presented herein. Examples of possible machine-readable mediums include HDD (Hard Disk Drive), SSD (Solid State Disk), SDD (Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

As the present features may be embodied in several forms without departing from the characteristics thereof, it should be understood that the scope of the present invention remains defined by the appended claims.

## Claims

1. A mobile terminal (300) comprising:
a main body (301);
a sensor (140) configured to continuously sense a wearer's biometric signal;
a band (302) connected to the main body (301) and configured to be wearable on a wrist;
a wireless communication unit (110) disposed on the main body (300) and configured to communicate with a predetermined server (410); and
a touch screen (151) disposed on a front surface of the main body (300) and configured to display screen information (600) including at least two indication hands moving to show a current time;
wherein the mobile terminal (300) further comprises:
a controller (180);
**characterised in that**
said controller (180) is configured to:
in response to an automatic transfer from a predetermined account being scheduled to be made within a reference time from the current time, display a notification icon (610) on the touch screen (151) indicating the automatic transfer in the screen information,
in response to a touch input being applied to the notification icon, perform control associated with the automatic transfer based on the applied touch input,
in response to the amount of savings in the predetermined account being smaller than the amount of money to be withdrawn through the automatic transfer, display a graphic object (732, 734) on the touch screen corresponding to an electronic wallet (SE), in addition to the notification icon, and
in response to a gesture of dragging and dropping the graphic object to the notification icon while the notification icon and the graphic object are displayed, calculate an insufficient amount of money for the automatic transfer and transmit a transfer message to the server (410) such that the calculated insufficient amount of money is transferred from the electronic wallet to the predetermined account, wherein
the controller (180) is further configured to check Z pin advance whether the wearer is a predetermined user authorised to use said electronic wallet or not using the sensed biometric signal, and limit an execution of the control corresponding to the touch input when the wearer is not the predetermined user.

2. The mobile terminal (300) of claim 1, wherein, in response to a predetermined touch input being applied to the notification i icon (610), the controller (180) is further configured to transmit an automatic transfer suspension message to the server (410) such that the automatic transfer is suspended.

3. The mobile terminal (300) of any one of claims 1 or 2, wherein the controller (180) is further configured to:
display the notification icon (610) at an edge of the touch screen (151), and
change an output position of the notification icon depending on a time at which the automatic transfer is scheduled to be made.

4. The mobile terminal (300) of claim 3, wherein the screen information (600) further includes a plurality of indices indicating a time, and
wherein the controller (180) is further configured to display the notification icon (610) to any one index corresponding to a time at which the automatic transfer is scheduled to be made among the plurality of indices.

5. The mobile terminal (300) of claim 3, wherein, in response to a drag input of moving from a first position of the edge to a second position being applied to the notification icon (610), the controller (180) is further configured to transmit a time change message to the server (410) such that the time at which the automatic transfer is scheduled to be made is changed to a time corresponding to the second position.

6. The mobile terminal (300) of any one of claims 1 to 5, wherein the controller (180) is further configured to process the notification icon (610) differently depending on a result of comparing an amount of savings in the predetermined account with an amount of money to be withdrawn through the automatic transfer,
wherein, in response to the amount of savings in the predetermined account being smaller than the amount of money to be withdrawn through the automatic transfer, the controller (180) is further configured to highlight the notification icon, and in response to the amount of savings in the predetermined account being greater than or equal to the amount of money to be withdrawn through the automatic transfer, the controller (180) is further configured not to highlight the notification icon.

7. The mobile terminal (300) of claim 6, wherein, in response to nonpayment occurring since the amount of savings in the predetermined account is smaller than the amount of money to be withdrawn through the automatic transfer, the controller (180) is further configured to display the highlighted notification icon (610') until the nonpayment is clear.

8. The mobile terminal (300) of claim 7, wherein, in response to the automatic transfer being completed, the controller (180) is further configured to stop displaying the notification icon (610).

9. The mobile terminal (300) according to any one of the preceding claims, wherein the reference time is a time set by a user to notify of the automatic transfer.

10. The mobile terminal (300) according to any one of the preceding claims, wherein the controller (180) is further configured to change a shape of the notification icon (610) depending on a payee who receives an amount of savings deposited in the predetermined account through the automatic transfer.

11. The mobile terminal (300) according to any one of the preceding claims, wherein, in response to an automatic transfer from a predetermined account being scheduled to be made within the predetermined time from the current time, the controller (180) is further configured to display an image (810) having a length gradually changing over time at an edge of the touch screen.

## Patentansprüche

1. Mobiles Endgerät (300), mit:
einem Hauptkörper (301),
einem Sensor (140), der dazu eingerichtet ist, ständig ein biometrisches Signal eines Trägers zu erfassen,
einem Band (302), das mit dem Hauptkörper (301) verbunden und dazu eingerichtet ist, auf einem Handgelenk tragbar zu sein,
einer Drahtloskommunikationseinheit (110), die auf dem Hauptkörper (300) angeordnet und dazu eingerichtet ist, mit einem vorbestimmten Server (410) zu kommunizieren, und
einem Berührungsbildschirm (151), der auf einer Vorderseite des Hauptkörpers (300) angeordnet und dazu eingerichtet ist, Bildschirminformation (600) anzuzeigen, die wenigstens zwei sich bewegende Zeiger zum Anzeigen einer aktuellen Zeit umfasst,
wobei das mobile Endgerät (300) ferner aufweist:
eine Steuereinheit (180),
**dadurch gekennzeichnet, dass** die Steuereinheit (180) eingerichtet ist zum:
in Reaktion auf eine automatische Überweisung von einem vorbestimmten Konto, die innerhalb einer Bezugszeit von der aktuellen Zeit zur Ausführung geplant ist, Anzeigen eines Benachrichtigungssymbols (610) auf dem Berührungsbildschirm (151), welches die automatische Überweisung in der Bildschirminformation angibt,
in Reaktion auf eine Berührungseingabe, die auf das Benachrichtigungssymbol ausgeübt wird, Ausführen einer mit der automatischen Überweisung zusammenhängenden Steuerung basierend auf der ausgeübten Berührungseingabe,
in Reaktion darauf, dass der Guthabenbetrag auf dem vorbestimmten Konto kleiner ist als der durch die automatische Überweisung abzuhebende Geldbetrag, Anzeigen eines einer elektronischen Geldbörse (SE) entsprechenden grafischen Objekts (732, 734) auf dem Berührungsbildschirm zusätzlich zu dem Benachrichtigungssymbol, und
in Reaktion auf eine Geste des Ziehens und Loslassens des grafischen Objekts auf das Benachrichtigungssymbol, während das Benachrichtigungssymbol und das grafische Objekt angezeigt werden, Berechnen eines Geldfehlbetrags für die automatische Überweisung und Senden einer Überweisungsnachricht an den Server (410), sodass der berechnete Geldfehlbetrag von der elektronischen Geldbörse auf das vorbestimmte Konto überwiesen wird, wobei
die Steuereinheit (180) ferner dazu eingerichtet ist, unter Verwendung des erfassten biometrischen Signals vorab zu überprüfen, ob der Benutzer ein zur Verwendung der elektronischen Geldbörse autorisierter, vorbestimmter Benutzer ist oder nicht, und eine Ausführung der der Berührungseingabe entsprechenden Steuerung zu begrenzen, wenn der Träger nicht der vorbestimmte Benutzer ist.

2. Mobiles Endgerät (300) nach Anspruch 1, wobei in Reaktion auf eine auf das Benachrichtigungssymbol (610) ausgeübte, vorbestimmte Berührungseingabe die Steuereinheit (180) ferner dazu eingerichtet ist, eine automatische Überweisungssuspendierungsnachricht an den Server (410) zu senden, sodass die automatische Überweisung aufgehoben wird.

3. Mobiles Endgerät (300) nach einem der Ansprüche 1 oder 2, wobei die Steuereinheit (180) ferner eingerichtet ist zum
Anzeigen des Benachrichtigungssymbols (610) an einem Rand des Berührungsbildschirms (151), und
Ändern einer Ausgabeposition des Benachrichtigungssymbols in Abhängigkeit von einer Zeit, zu der die automatische Überweisung zur Ausführung geplant ist.

4. Mobiles Endgerät (300) nach Anspruch 1, wobei die Bildschirminformation (600) ferner mehrere eine Zeit angebende Indizes enthält, und
wobei die Steuereinheit (180) ferner dazu eingerichtet ist, das Benachrichtigungssymbol (610) an jeglichem Index aus den mehreren Indizes anzuzeigen, der einer Zeit entspricht, zu der die automatische Überweisung zur Ausführung geplant ist.

5. Mobiles Endgerät (300) nach Anspruch 3, wobei in Reaktion auf eine Zieheingabe eines Bewegens von einer ersten Randposition zu einer zweiten Position, die auf das Benachrichtigungssymbol (610) ausgeübt wird, die Steuereinheit (180) ferner dazu eingerichtet ist, eine Zeitänderungsnachricht an den Server (410) zu senden, sodass die Zeit, zu der die automatische Überweisung zur Ausführung geplant ist, in eine der zweiten Position entsprechende Zeit geändert wird.

6. Mobiles Endgerät (300) nach einem der Ansprüche 1 bis 5, wobei die Steuereinheit (180) ferner dazu eingerichtet ist, das Benachrichtigungssymbol (610) unterschiedlich zu verarbeiten abhängig von einem Ergebnis eines Vergleichens eines Guthabenbetrags auf dem vorbestimmten Konto mit einem durch die automatische Überweisung abzuhebenden Geldbetrag,
wobei in Reaktion darauf, dass der Guthabenbetrag auf dem vorbestimmten Konto kleiner ist als der durch die automatische Überweisung abzuhebende Geldbetrag, die Steuereinheit (180) ferner dazu eingerichtet ist, das Benachrichtigungssymbol hervorzuheben, und in Reaktion darauf, dass der Guthabenbetrag auf dem vorbestimmten Konto gleich oder größer ist als der durch die automatische Überweisung abzuhebende Geldbetrag, die Steuereinheit (180) ferner dazu eingerichtet ist, das Benachrichtigungssymbol nicht hervorzuheben.

7. Mobiles Endgerät (300) nach Anspruch 6, wobei in Reaktion auf eine Nichtzahlung, die auftritt, da der Guthabenbetrag auf dem vorbestimmten Konto kleiner ist als der durch die automatische Überweisung abzuhebende Geldbetrag, die Steuereinheit (180) ferner dazu eingerichtet ist, das hervorgehobene Benachrichtigungssymbol (610) anzuzeigen, bis die Nichtzahlung klar ist.

8. Mobiles Endgerät (300) nach Anspruch 7, wobei in Reaktion darauf, dass die automatische Überweisung abgeschlossen ist, die Steuereinheit (180) ferner dazu eingerichtet ist, ein Anzeigen des Benachrichtigungssymbols (610) zu beenden.

9. Mobiles Endgerät (300) nach einem der vorhergehenden Ansprüche, wobei die Bezugszeit eine durch einen Benutzer zur Benachrichtigung über die automatische Überweisung eingestellte Zeit ist.

10. Mobiles Endgerät (300) nach einem der vorhergehenden Ansprüche, wobei die Steuereinheit (180) ferner dazu eingerichtet ist, eine Form des Benachrichtigungssymbols (610) in Abhängigkeit eines Zahlungsempfängers zu ändern, der durch die automatische Überweisung einen auf dem vorbestimmten Konto hinterlegten Guthabenbetrag erhält.

11. Mobiles Endgerät (300) nach einem der vorhergehenden Ansprüche, wobei in Reaktion darauf, dass eine automatische Überweisung von einem vorbestimmten Konto innerhalb der vorbestimmten Zeit von der aktuellen Zeit zur Ausführung geplant ist, die Steuereinheit (180) ferner dazu eingerichtet ist, ein Bild (810) mit einer sich allmählich über die Zeit ändernden Länge an einem Rand des Berührungsbildschirms anzuzeigen.

## Revendications

1. Terminal mobile (300) comprenant :
un corps principal (301) ;
un capteur (140) conçu pour détecter en continu un signal biométrique de la personne qui porte le terminal mobile ;
un bracelet (302) relié au corps principal (301) et conçu pour être porté au poignet ;
une unité de communication sans fil (110) disposée sur le corps principal (300) et conçue pour communiquer avec un serveur prédéfini (410) ; et
un écran tactile (151) disposé sur une face avant du corps principal (300) et conçu pour afficher des informations d'écran (600)
comprenant au moins deux mains d'indication se déplaçant pour indiquer une heure actuelle ;
le terminal mobile (300) comprenant en outre :
un organe de commande (180) ;
**caractérisé en ce que**
ledit organe de commande (180) est conçu pour :
en réponse à un transfert automatique à partir d'un compte prédéfini étant programmé pour être effectué dans un délai de référence à partir de l'heure actuelle, afficher une icône de notification (610) sur l'écran tactile (151) indiquant le transfert automatique dans les informations d'écran,
en réponse à une entrée tactile appliquée à l'icône de notification, procéder à une commande associée au transfert automatique en fonction de l'entrée tactile appliquée,
en réponse au montant d'épargne sur le compte prédéfini inférieur à la quantité d'argent à prélever par le transfert automatique, afficher un objet graphique (732, 734) sur l'écran tactile correspondant à un portefeuille électronique (SE),
en plus de l'icône de notification, et
en réponse à un geste de glisser et déposer l'objet graphique sur l'icône de notification tandis que l'icône de notification et l'objet graphique sont affichés, calculer une quantité insuffisante d'argent pour le transfert automatique et transmettre un message de transfert au serveur (410) de sorte que la quantité insuffisante calculée d'argent est transférée depuis le portefeuille électronique au compte prédéfini,
l'organe de commande (180) étant en outre conçu pour vérifier à l'avance si la personne qui porte le terminal mobile est l'utilisateur prédéfini autorisé à utiliser ledit portefeuille électronique ou n'utilise pas le signal biométrique détecté, et donc limiter l'exécution de la commande correspondant à l'entrée tactile lorsque la personne qui porte le terminal mobile n'est pas l'utilisateur prédéfini.

2. Terminal mobile (300) selon la revendication 1, en réponse à une entrée tactile prédéfinie appliquée à l'icône de notification (610), l'organe de commande (180) étant en outre conçu pour transmettre un message de suspension de transfert automatique au serveur (410) de sorte que le transfert automatique soit suspendu.

3. Terminal mobile (300) selon l'une quelconque des revendications 1 ou 2, l'organe de commande (180) étant en outre conçu pour :
afficher l'icône de notification (610) sur un bord de l'écran tactile (151) et
modifier une position de sortie de l'icône de notification en fonction d'une heure à laquelle est programmé le transfert automatique.

4. Terminal mobile (300) selon la revendication 3, les informations d'écran (600) comprenant en outre une pluralité d'indices indiquant une heure, et
l'organe de commande (180) étant en outre conçu pour afficher l'icône de notification (610) pour un quelconque indice correspondant à une heure à laquelle est programmé le transfert automatique parmi la pluralité d'indices.

5. Terminal mobile (300) selon la revendication 3, en réponse à une entrée glissée de déplacement d'une première position du bord à une seconde position appliquée à l'icône de notification (610),
l'organe de commande (180) étant en outre conçu pour transmettre un message de changement d'heure au serveur (410) de sorte que l'heure à laquelle est programmé le transfert automatique soit modifiée à une heure correspondant à la seconde position.

6. Terminal mobile (300) selon l'une quelconque des revendications 1 à 5, l'organe de commande (180) étant en outre conçu pour traiter l'icône de notification (610) différemment en fonction d'un résultat de comparaison entre une quantité d'épargne sur le compte prédéfini et une quantité d'argent à prélever par le transfert automatique,
en réponse à la quantité d'épargne sur le compte prédéfini étant inférieure à la quantité d'argent à transférer par le transfert automatique, l'organe de commande (180) étant en outre conçu pour mettre en évidence l'icône de notification, et en réponse à la quantité d'épargne sur le compte prédéfini étant supérieure ou égale à la quantité d'argent à prélever par le transfert automatique, l'organe de commande (180) étant en outre conçu pour ne pas mettre en évidence l'icône de notification.

7. Terminal mobile (300) selon la revendication 6, en réponse à un non-paiement puisque la quantité d'épargne sur le compte prédéfini est inférieure à la quantité d'argent à prélever par transfert automatique, l'organe de commande (180) étant en outre conçu pour afficher l'icône de notification mise en évidence (610') jusqu'à ce que le non-paiement soit acquitté.

8. Terminal mobile (300) selon la revendication 7, en réponse au transfert automatique terminé, l'organe de commande (180) étant en outre configuré pour ne plus afficher l'icône de notification (610).

9. Terminal mobile (300) selon l'une quelconque des revendications précédentes, l'heure de référence étant une heure définie par un utilisateur pour notifier le transfert automatique.

10. Terminal mobile (300) selon l'une quelconque des revendications précédentes, l'organe de commande (180) étant en outre configuré pour modifier la forme de l'icône de notification (610) en fonction d'un bénéficiaire qui a reçu une quantité de l'épargne du compte prédéfini par transfert automatique.

11. Terminal mobile (300) selon l'une quelconque des revendications précédentes, en réponse à un transfert automatique à partir d'un compte prédéfini étant programmé à une heure prédéfinie à partir de l'heure actuelle, l'organe de commande (180) étant en outre configuré pour afficher une image (810) ayant une longueur pouvant progressivement changer dans le temps au niveau d'un bord de l'écran tactile.
